# EUROPEAN PATENT SPECIFICATION

(11) **EP 0 379 055 B1**
(45) Date of publication and mention of the grant of the patent: **10.11.1999**
(21) Application number: 90100485.3
(22) Date of filing: 11.01.1990
(51) Int. Cl.: C08G 59/02, C08G 59/20

(54) **Mesogenic advanced epoxy compounds**
Mesogene kettenverlängerte Epoxydverbindungen
Composés époxydes allongés mésogènes

(30) Priority: 17.01.1989 US 297896
(43) Date of publication of application: 25.07.1990
(73) Proprietor: THE DOW CHEMICAL COMPANY, Midland, Michigan 48674 (US)
(72) Inventor: Earls, Jimmy D., Lake Jackson Texas 77566 (US); Puckett, Paul M., Lake Jackson Texas 77566 (US)
(74) Representative: Kremer, Robert A.M.

(56) References cited:
- EP-A- 0 252 359
- EP-A- 0 287 233
- US-A- 3 182 074
- US-A- 3 725 341
- WORLD PATENTS INDEX Derwent Publications Ltd., London, GB; AN 78-59720A
- MACROMOLECULES vol. 20, no. 8, August 1987, WASHINGTON DC pages 2010 - 2017; SHAUL M. AHORANI: '*Monodisperse Rodlike Oligomers and Their Mesomorphic Higher Molecular Weight Homologues*'
- THE JOURNAL OF ORGANIC CHEMISTRY vol. 41, no. 15, 23 July 1976, EASTON pages 2566 - 2571; D.C. SCHROEDER, J.P. SCHROEDER: 'Liquid Crystals. Mesomorphic Phenols and Primary Amines. p-Phenylene Dibenzoates with Terminal Hydroxy and Amino Groups.'
- CHEMICAL ABSTRACTS, vol. 103, no. 16, 21 October 1985, Columbus, Ohio, US; abstract no. 124509N, '*Curing agents for epoxy resins*'

## Description

The present invention concerns advanced epoxy resin compounds containing mesogenic moieties, curable compositions and cured compositions thereof.

Epoxy resins are useful in many applications such as adhesives, coatings, castings, laminates, and composites. In each of these applications, it is desirable to have epoxy resins with improved physical and/or thermal properties.

The present invention provides advanced epoxy resin compounds with improved properties through the incorporation of mesogenic (liquid crystalline type) structures into the polymer chain. These resins are obtained through advancement reactions with mesogenic compounds containing active hydrogens. The typical structure of the mesogenic compounds consists of two or more aromatic rings bridged by a rigid, central linkage. The active hydrogen sites are provided by hydroxyl, amine, amide and/or carboxylic acid functionality.

An additional aspect of the present invention is that the property improvements which are obtained with these resins can be further enhanced by the application of electric and magnetic fields and shear stresses during processing and/or cure.

One aspect of the present invention pertains to advanced epoxy resin compounds prepared by reacting an epoxy resin having an average of more than one vicinal epoxy group per molecule with a compound having an average of more than one active hydrogen atom per molecule represented by the following formulas I or III: 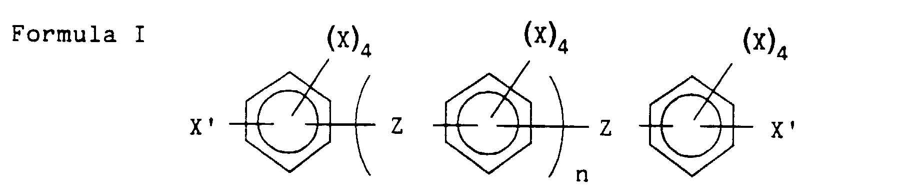 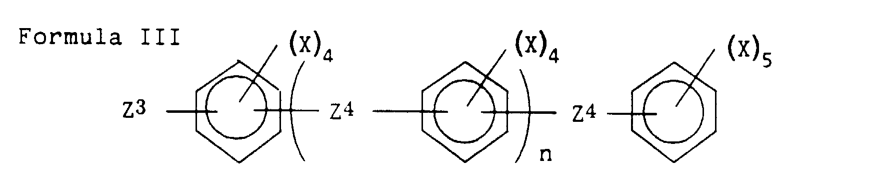 wherein at least about 80 percent of the Z and X' groups are in the para position with respect to each other in Formula I; at least about 80 percent of the Z³ and Z⁴ groups are in the para position with respect to each other in Formula III; each X is independently hydrogen, a hydrocarbyl or hydrocarbyloxy group having from 1 to 12, preferably from 1 to 6, most preferably from 1 to 4, carbon atoms, a halogen atom, -NO₂ or -C≡N; each X' is independently a hydroxyl group, a carboxylic acid group or the group represented by formula IV: 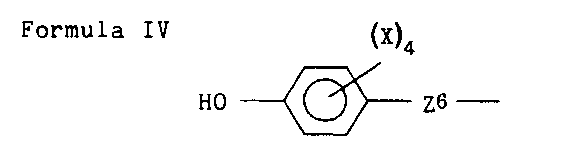 each Z or Z⁴ is independently -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂-, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, a direct single bond when n≧1, 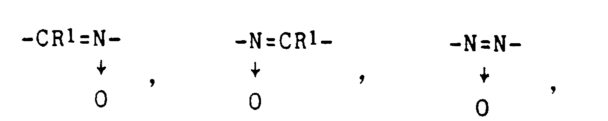 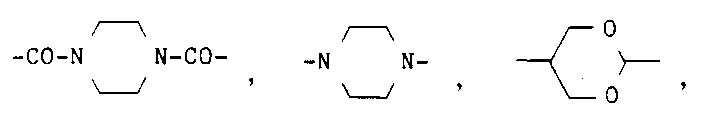 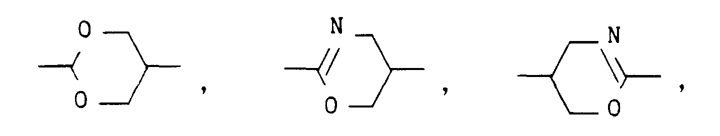 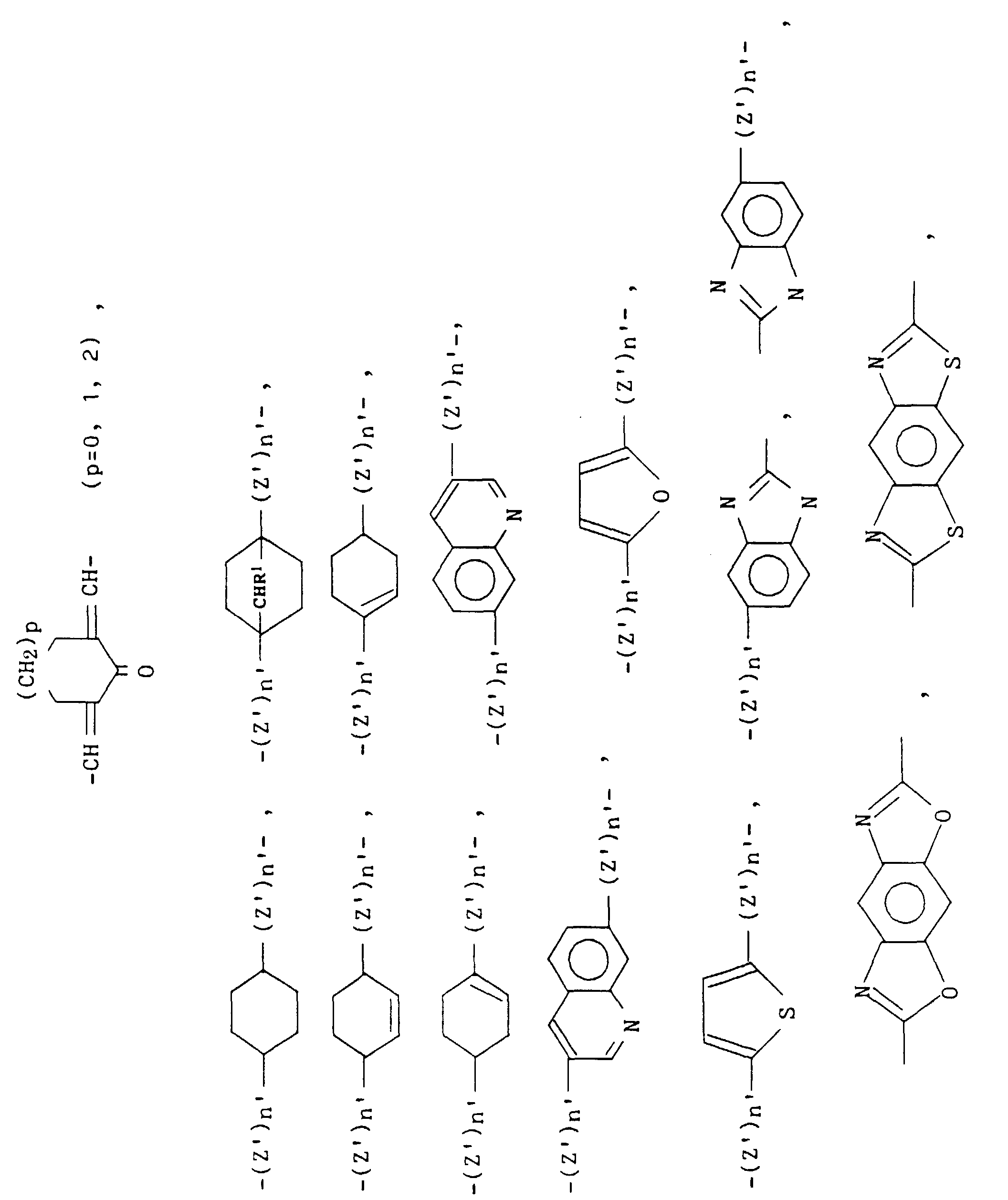 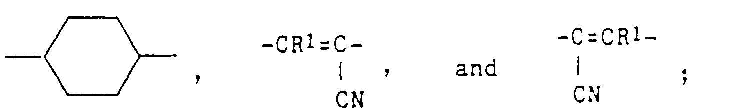 Z⁴ having also the meaning -CR¹=N- or -N=CR¹- or direct single bond
Z' is independently -O-CO-, -CO-O-, -NR¹⁻CO- and -CO-NR¹-; each n' is independently zero or 1; R¹ is independently a hydrogen atom or an alkyl group having from 1 to 4 carbon atoms; Z⁶ is a divalent hydrocarbyl group having from 1 to 12, preferably from 1 to 6, more preferably from 1 to 4 carbon atoms; -SO-, -SO₂-, -S-, -S-S-, -O-, or -CO-;
Z³ is NH₂, NH₂-SO₂-, NH₂-CO₂-, or NH₂-Z⁵-O-;
Z⁵ is an alkyl or cycloalkyl group having from 1 to 10, preferably from 1 to 6, more preferably from 1 to 3 carbon atoms.

Another aspect of the present invention pertains to curable compositions comprising the aforementioned advanced epoxy resins and a curing amount of a curing agent or curing catalyst therefor.

A further aspect of the present invention pertains to products or articles resulting from curing the aforementioned curable compositions.

A still further aspect of the present invention pertains to products resulting from the application of an electric field or magnetic field or shear flow during curing or processing of the aforementioned advanced epoxy compounds.

The advancecd epoxy resin compounds of the present invention provide cured products having an improvement in one or more of the following physical or thermal properties such as, but not limited to, glass transition temperature, tensile strength, tensile modulus, flexural strength, and flexural modulus.

The term "hydrocarbyl" as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term "hydrocarbyloxy" means a hydrocarbyl group having an oxygen linkage between it and the carbon atom to which it is attached.

The term "active hydrogen atom" as employed herein means a hydrogen atom which is reactive with a vicinal epoxide group.

Particularly suitable compounds having an average of more than one active hydrogen atom per molecule which can be employed herein include hydroxyl- or carboxylic acid- containing compounds, primary amine-containing compounds and compounds containing more than one aromatic amide group per molecule. These compounds include, for example, those compounds represented by the aforementioned formulas I and III.

Particularly suitable hydroxyl-containing compounds include, for example, bis(4-hydroxyphenyl)terephthalate, N,N'-bis(4-hydroxyphenyl)terephthalamide, bis(4'-hydroxybiphenyl)terephthalate, 4,4'-dihydroxyphenylbenzoate, 4,4'-dihydroxybenzanilide, 4,4"-dihydroxybiphenylbenzoate, 1,4-bis-(4'-hydroxyphenyl-1'-carboxamide)benzene, 1,4-bis(4'-hydroxyphenyl-1'-carboxy)benzene, 4,4'-bis(4"-hydroxyphenyl-1"-carboxy)biphenyl, bis(4'-hydroxyphenyl)-1,4-benzenediimine, 4,4'-dihydroxy-α-methylstilbene, 4,4'-dihydroxy-α-cyanostilbene, 4,4-dihydroxystilbene, 4,4'-dihydroxy-2,2'-dimethylazoxybenzene, 4,4'-dihydroxy-a,a'-diethylstilbene and mixtures thereof.

Particularly suitable carboxylic acid-containing compounds include, for example, 4,4'-benzanilide dicarboxylic acid, 4,4'-phenylbenzoate dicarboxylic acid, 4,4'-stilbenedicarboxylic acid and mixtures thereof.

Particularly suitable primary amine-containing compounds include, for example, 4'-sulfonamido-N-phenyl benzamide, 4'-sulfonaulido-N-phenyl-4-chlorobenzamide, 4-amino-1-phenylbenzoate, 4-amino-N-phenylbenzamide, N-phenyl-4-aminophenyl-1-carboxamide, phenyl-4-aminobenzoate, biphenyl-4-aminobenzoate, 1-phenyl-4'-aminophenylterephthalate, and mixtures thereof.

Particularly suitable aromatic amide-containing compounds include, for example, N,N'-diphenylterephthalamide, 1,4-benzenediphenylcarboxamide, 1,4-cyclohexanediphenylcarboxamide, benzanilide ether, N-phenylbenzamide and mixtures thereof.

Suitable epoxy resins which can be advanced with the aforementioned active hydrogen-containing compounds include those epoxy resins having an aliphatic, cycloaliphatic or aromatic base. These include the polyglycidyl ethers of alkylene glycols, polyoxyalkylene glycols, dihydric phenols including bisphenols and dihydroxy biphenyl as well as substituted derivatives thereof, phenol and substituted phenol aldehyde novolac resins, phenol or substituted phenol hydrocarbon resins. The dihydric phenols and novolac resins and hydrocarbon resins can contain such substituents as hydrocarbyl or hydrocarbyloxy groups containing from 1 to 10, preferably from 1 to 6, more preferably from 1 to 3 carbon atoms, halogen atoms, particularly chlorine or bromine, -NO₂, and -C≡N. Exemplary of such suitable epoxy resins include those represented by the following formulas VI, VII, VIII, IX or X: 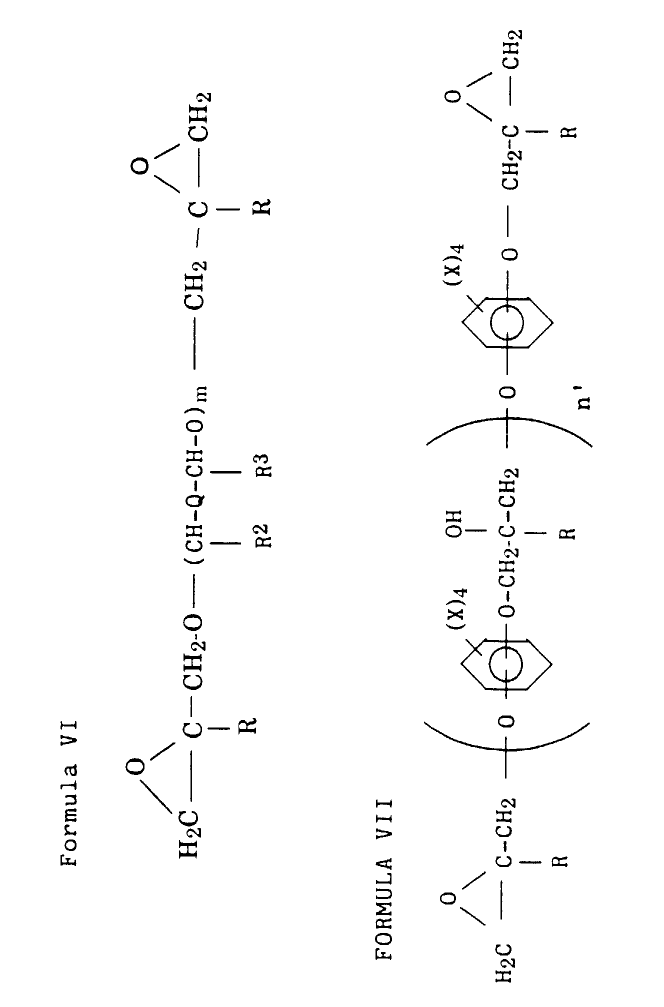 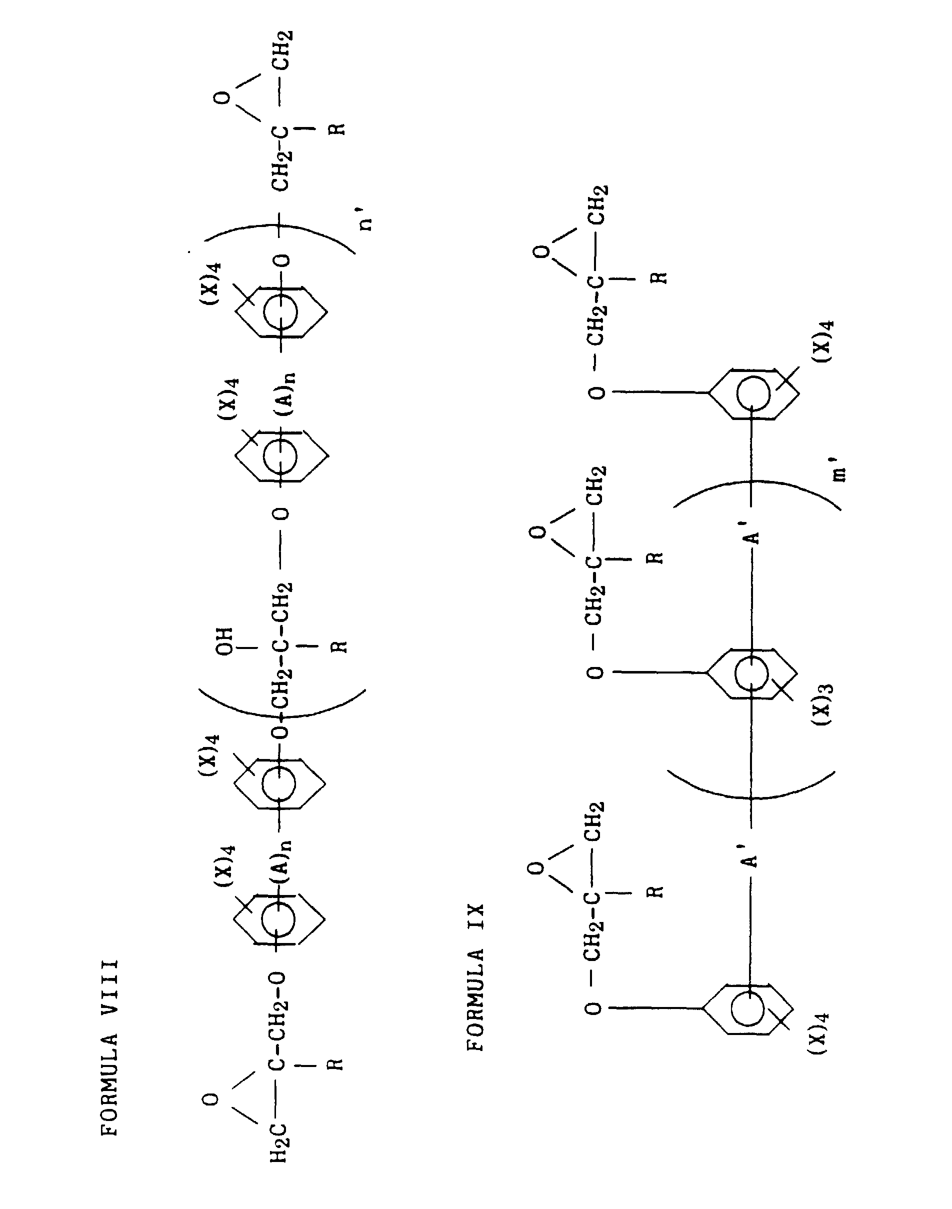 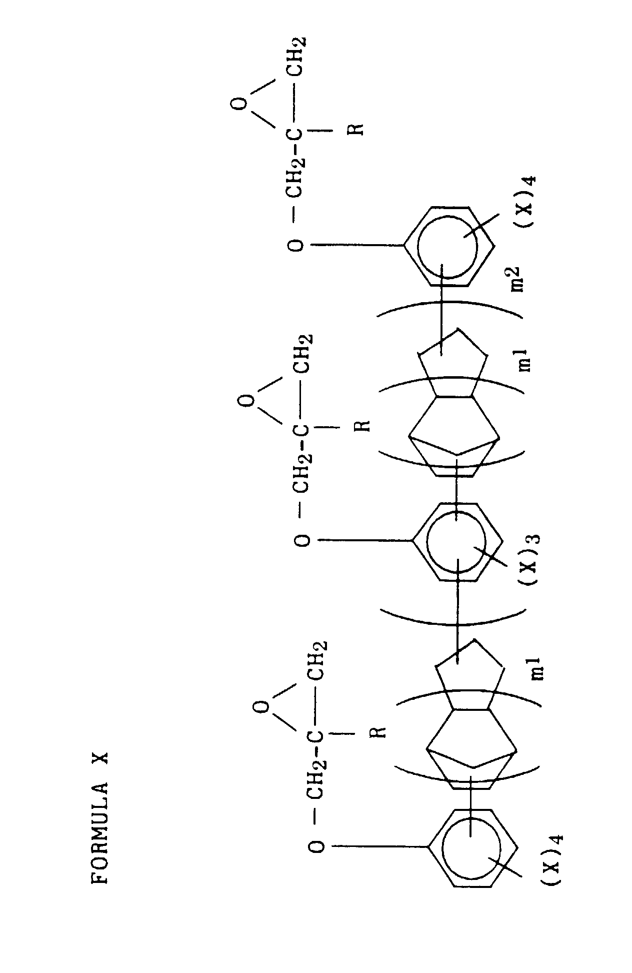 wherein each A is independently a divalent hydrocarbyl group having from 1 to 12, preferably from 1 to 6, more preferably from 1 to 3 carbon atoms, -O-, -S-, -S-S-, -SO-, -SO₂-, or -CO-; each A' independently a divalent hydrocarbon group having from 1 to 6, preferably from 1 to 3 carbon atoms; Q is a single bond, -CH₂-S-CH₂-, -(CH₂)_{n¹}-, or 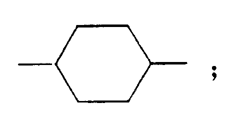 each R is independently hydrogen or an alkyl group having from 1 to 4 carbon atoms; each R² and R³ is independently hydrogen, a hydrocarbyl or halohydrocarbyl group having from 1 to 6, preferably from 1 to 3, more preferably from 1 to 2 carbon atoms; each X is independently hydrogen, a hydrocarbyl or hydrocarbyloxy group having from 1 to 12, preferably from 1 to 6, most preferably from 1 to 4 carbon atoms, a halogen atom, -NO₂ or -C≡N; m has a value from 1 to 10, preferably from 1 to 4, more preferably from 1 to 2; m' has a value from 0.01 to 12, preferably from 1 to 6, more preferably from 1 to 3; m¹ has an average value from 1 to 12, preferably from 1 to 6, more preferably from 1 to 3; m² has a value from 1 to 12, preferably from 2 to 6, more preferably from 2 to 3; n has a value of zero or 1; n' has an average value from zero to 3, preferably from zero to 1.5, more preferably from zero to 0.5; and n¹ has an average value from 1 to 10.

The epoxy resin having an average of more than one vicinal epoxy group per molecule and the compound having an average of more than one active hydrogen atom per molecule are reacted in amounts which provide suitably from 0.01:1 to 1.05:1, more suitably from 0.01:1 to 0.5:1, most suitably from 0.01:1 to 0.3:1 active hydrogen atoms per epoxy group.

When the epoxy resin having an average of more than one vicinal epoxy group per molecule and the compound having an average of more than one active hydrogen atom per molecule and containing one or more mesogenic structures are reacted in amounts which provide from 0.01:1 to 0.95:1 active hydrogen atoms per epoxy group, a curable (thermosettable) advanced epoxy resin is produced. When the epoxy resin having an average of more than one vicinal epoxy group per molecule and the compound having an average of more than one active hydrogen atom per molecule and containing one or more mesogenic structures are reacted in amounts which provide from 0.96:1 to 1.05:1 active hydrogen atoms per epoxy group, a substantially thermoplastic, resinous product is provided. Said resin composition contains little, if any, curable residual epoxide functionality, and may thus be processed using the typical processing methods employed with conventional thermoplastics, such as, for example, injection molding or extrusion. Thermosetting may, however, be induced, for example, via reaction of all or a part of the backbone secondary hydroxyl groups produced in the aforesaid advancement reaction, with a curing agent therefor. One class of said curing agents includes the di/polyisocyantes as well as the blocked di/polyisocyanates which can be induced to react with said secondary hydroxy groups providing urethane linked crosslinks between the resin chains. An example of a specific diisocyanate especially useful herein is 4,4'-diisocyanatodiphenylmethane. When the compounds having an average of more than one active hydrogen atom per molecule used in the advancement reaction is a diphenol, the resultant resinous product is a phenoxy resin. According to the teachings found in Encyclopedia of Polymer Science and Engineering, Vol. 6, page 331, published by John Wiley and Sons, New York (1986) aside from the aforementioned advancement method, a phenoxy resin may also be prepared by reaction of a 1:1 mole ratio of high purity bisphenol A and epichlorohydrin. It is therefore operable to prepare the phenoxy resins containing one or more mesogenic structures of the present invention via reaction of one or more diphenols containing one or more mesogenic structures with one or more epihalohydrins. A typical example would thus be the phenoxy resin produced from the reaction of epichlorohydrin and bis(4-hydroxyphenyl)terephthalate using the aforementioned stoichiometric ratio.

The advancement reaction can be conducted in the presence of a suitable advancement catalyst such as phosphines, quaternary ammonium compounds, phosphonium compounds and tertiary amines. Particularly suitable catalysts include, for example, ethyltriphenylphosphonium chloride, ethyltriphenylphosphonium bromide, ethyltriphenylphosphonium iodide, ethyltriphenylphosphonium diacetate (ethyltriphenylphosphonium acetate·acetic acid complex), ethyltriphenylphosphonium phosphate, tetrabutylphosphonium chloride, tetrabutylphosphonium bromide, tetrabutylphosphonium iodide, tetrabutylphosphonium diacetate (tetrabutylphosphonium acetate·acetic acid complex), butyltriphenylphosphonium tetrabromobisphenate, butyltriphenylphosphonium bisphenate, butyltriphenylphosphonium bicarbonate, benzyltrimethylammonium chloride, tetramethylammonium hydroxide, triethylamine, tripropylamine, tributylamine, 2-methylimidazole, benzyldimethylamine and mixtures thereof. Many of these catalysts are described in U. S. Patent Nos. 3,306,872; 3,341,580; 3,379,684; 3,477,990; 3,547,881; 3,637,590; 3,843,605; 3,948,855; 3,956,237; 4,048,141; 4,093,650; 4,131,633; 4,132,706; 4,171,420; 4,177,216 and 4,366,295.

The amount of advancement catalyst depends, of course, upon the particular reactants and catalyst employed; however, the advancement catalyst is usually employed in quantities of from 0.03 to 3, preferably from 0.03 to 1.5, most preferably from 0.05 to 1.5 percent by weight based upon the weight of the epoxy-containing compound.

The advancement reaction can be conducted at atmospheric, superatmospheric or subatmospheric pressures at temperatures of from 20°C to 260°C, preferably from 80°C to 200°C, more preferably from 100°C to 150°C. The time required to complete the advancement reaction depends upon the temperature employed. Higher temperatures require shorter periods of time whereas lower temperatures require longer periods of time. Generally, however, times of from 5 minutes to 24 hours, preferably from 30 minutes to 8 hours, more preferably from 30 minutes to 3 hours are suitable.

If desired, the advancement reaction can be conducted in the presence of one or more solvents. Suitable such solvents include, for example, glycol ethers, aliphatic and aromatic hydrocarbons, aliphatic ethers, cyclic ethers, ketones, esters, amides, and combinations thereof. Particularly suitable solvents include, for example, toluene, benzene, xylene, methyl ethyl ketone, methyl isobutyl ketone, diethylene glycol methyl ether, dipropylene glycol methyl ether, N,N-dimethylformamide, N-methylpyrrolidinone, tetrahydrofuran, propylene glycol methyl ether and combinations thereof. The solvents can be employed in amounts of from zero to 80 percent, preferably from 20 percent to 60 percent, more preferably from 30 percent to 50 percent by weight based upon the weight of the reaction mixture.

While the advancement of epoxy resins with active hydrogen-containing compounds having rigid, liquid crystal type structures results in an epoxy resin with improved properties, an epoxy resin with even more improvement can be obtained if the advanced epoxy resin compound is subjected to external fields or induced stresses. These fields or stresses provide the orientation of the epoxy resin advancement adducts due to their anisotropic properties. To achieve this orientation during processing, electric or magnetic fields and shear stresses can be applied. The preferred method for orientation is through the application of shear stress. In addition to orientation by electric and magnetic fields, polymeric mesophases can be oriented by low shear rates (0.1-90 sec⁻¹) which are induced by flow through dies, orifices, and mold gates. For the potential mesomorphic systems based on the advancement of epoxy resins with rigid, liquid crystal type structures, shear orientation can be induced by processing methods such as injection molding, extrusion, filament winding, pultrusion and filming at temperatures from ambient to 200°C, preferably from ambient to 160°C and more preferably from ambient to 120°C. At the time of this processing, an epoxy resin hardener and/or catalyst which would be a part of the final formulated system would set or cure the resin in an oriented, highly ordered state from 1 minute to 1 hour, preferably from 1 minute to 30 minutes, and more preferably from 1 minute to 10 minutes.

The advanced epoxy resins of the present invention can be cured by the conventional means for curing epoxy resins such as by mixing with any suitable curing agent. Suitable such curing agents include, for example, primary and secondary polyamines, carboxylic acids and anhydrides thereof, phenolic hydroxyl-containing compounds, guanidines, urea-aldehyde resins, melamine-aldehyde resins, alkoxylated urea-aldehyde resins, alkoxylated melamine-aldehyde resins, aliphatic, cycloaliphatic and aromatic amines and combinations thereof. Particularly suitable curing agents include, for example, ethylenediamine, diethylenetriamine, triethylenetetramine, tetraethylenepentamine, sulfanilamide, bis(hydroxyphenyl)methane, methylenedianiline, maleic anhydride, chlorendic anhydride, diaminocyclohexane, isophoronediamine, methylbicyclo(2.2.1)heptene-2,3-dicarboxylic anhydride, phenol-formaldehyde novolac resin, cresol-formaldehyde novolac resin, methylolated urea-formaldehyde resin, methylolated melamine-formaldehyde novolac resin, diethyltoluenediamine, diaminodiphenyl sulfone and combinations thereof. The curing agents are employed in an amount which will effectively cure the composition containing the mesogenic moieties. These amounts will depend upon the particular advanced epoxy resin and curing agent employed; however, suitable amounts include, for example, from 0.95:1 to 1.2:1, more suitably from 0.95:1 to 1.15:1, most suitably from 1:1 to 1.15:1 equivalents of curing agent per epoxide equivalent for those curing agents which cure by reacting with the epoxy group of the epoxy resin. The Handbook of Epoxy Resins by Lee and Neville, McGraw-Hill, 1967, contains various discussions concerning the curing of epoxy resins as well as compilation of suitable curing agents.

The advanced epoxy resin compound of the present invention can be blended with other materials such as solvents or diluents, fillers, pigments, dyes, flow modifiers, thickeners, reinforcing agents, mold release agents, wetting agents, stabilizers, fire retardant agents, surfactants and combinations thereof.

These additives are added in functionally equivalent amounts, e.g., the pigments and/or dyes are added in quantities which will provide the composition with the desired color; however, they are suitably employed in amounts of from zero to 20, more suitably from 0.5 to 5, most suitably from 0.5 to 3 percent by weight based upon the weight of the total blended composition.

Solvents or diluents which can be employed herein include, for example, hydrocarbons, ketones, glycol ethers, aliphatic ethers, cyclic ethers, esters, amides and combinations thereof. Particularly suitable solvents or diluents include, for example, toluene, benzene, xylene, methyl ethyl ketone, methyl isobutyl ketone, diethylene glycol methyl ether, dipropylene glycol methyl ether, dimethylformamide, N-methylpyrrolidinone, tetrahydrofuran, propylene glycol methyl ether and combinations thereof.

The modifiers such as thickeners and flow modifiers can be suitably employed in amounts of from zero to 10, more suitably from 0.5 to 6, most suitably from 0.5 to 4 percent by weight based upon the weight of the total composition.

Reinforcing materials which can be employed herein include, for example, natural and synthetic fibers in the form of mats, woven fabric, monofilament, multifilament, unidirectional fiber, rovings, random fibers or filaments, inorganic fillers or whiskers and hollow spheres. Suitable reinforcing materials which can be employed herein include, for example, glass, ceramics, nylon, rayon, cotton, aramid, graphite, polyalkylene terephthalate, polyethylene, polypropylene polyesters and combinations thereof.

Suitable fillers which can be employed herein include, for example, inorganic oxides, ceramic microspheres, plastic microspheres, inorganic whiskers, glass microspheres, CaCO₃ and combinations thereof.

The fillers can be employed in amounts suitably from zero to 95, more suitably from 10 to 80, most suitably from 40 to 60 percent by weight based upon the weight of the total composition.

The following examples are illustrative of the present invention.

### Synthesis of N,N'-Diphenylterephthalamide

N,N'-diphenylterephthalamide (Structure I) was synthesized from aniline and terephthaloyl chloride using acetone as a reaction media and an aqueous solution of NaOH to neutralize the HCl generated. Terephthaloyl chloride (87.2 grams, 0.43 moles) was first added to a stirred, 2-liter reaction flask containing one liter of acetone. After the terephthaloyl chloride has dissolved, aniline (80.0 grams, 0.86 moles) was added dropwise using an addition funnel over a 30 minute period. During the course of this addition, a white precipitate was formed. A 200 ml aqueous solution of NaOH (34.3 grams, 0.86 moles) was then added, also using an addition funnel, over a 30 minute period. The reaction temperature during both the aniline and NaOH addition was maintained below 35°C by blowing air onto the outside of the reaction flask. After the NaOH addition, the reaction mixture was stirred for three hours and then vacuum filtered (filtrate pH = 7). The filter cake obtained was washed with 400 ml of acetone and then added to one liter of deionized water, stirred for 15 minutes and filtered. This filter cake was washed with 500 ml of acetone and then dried in a 105°C vacuum oven to a constant weight. This final product (114.4 grams, yield = 84.2 percent) exhibited a sharp melting endotherm by differential scanning calorimetry (DSC) at 346°C. Also Fourier transform infrared (FTIR) analysis showed the following absorbances which are indicative of the structure for the final product: 3329 cm⁻¹ (N-H stretch), 1528 cm⁻¹ (Amide II band) and 1650 cm⁻¹ (Amide I band).

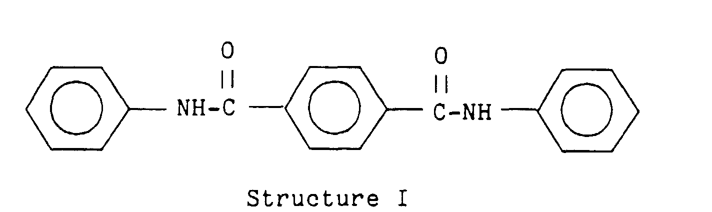

### Synthesis of N-Phenylbenzamide

N-phenylbenzamide (Structure II) was synthesized from aniline and benzoyl chloride using acetone as a reaction media and an aqueous solution of NaOH to neutralize the HCl generated. A 20 ml aqueous solution of NaOH (2.57 grams, 0.064 moles) and 6.0 grams (0.064 moles) of aniline were first added to a stirred 250 ml flask containing 75 ml of acetone. Benzoyl chloride (9.06 grams, 0.064 moles) was next added over a five minute period. This reaction mixture which now contains a white precipitate was stirred for 1.5 hours and then diluted with 50 ml of deionized water. This solution was next filtered and the filter cake obtained was sequentially washed with 50 ml of deionized water (two times) followed by 50 ml of methanol. The washed filter cake was recovered and analysis of this product showed a sharp melting endotherm at 169°C.

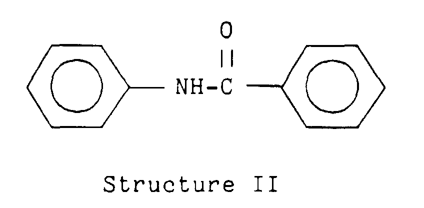

### Synthesis of 4'-Sulfonamido-N-Phenylbenzamide

4'-sulfonamido-N-phenylbenzamide (Structure III) was synthesized from sulfanilamide and benzoyl chloride using acetone as a reaction media and an aqueous solution of NaOH to neutralize the HCl generated. Sulfanilamide (100 grams, 0.58 moles) was first added to a stirred, two liter reaction flask containing one liter of acetone. After the sulfanilamide had dissolved, benzoyl chloride (82 grams, 0.58 moles) was added dropwise using an addition funnel over a 20 minute period. During the course of this addition, a white precipitate was formed. A 200 ml aqueous solution of NaOH (23.2 grams, 0.58 moles) was then added, also using an addition funnel, over a 30 minute period. The reaction temperature during this addition and that of the benzoyl chloride was maintained below 30°C by blowing air onto the outside of the reaction flask. After the NaOH addition, the reaction mixture was stirred for two hours and then vacuum filtered. The filter cake obtained was washed with one liter of deionized water. These solids were next added to 300 ml of acetone, stirred for 15 minutes, and then vacuum filtered. This filter cake was washed with 500 ml of deionized water followed by 300 ml of acetone and then dried to a constant weight in a 100°C vacuum oven. The final dried product (145 grams, yield = 90.2 percent) exhibited a sharp melting endotherm by DSC at 297°C. Also FTIR analysis of this material showed the following absorbances which are indicative of the structure for the final product: 3350 cm⁻¹ (N-H stretch), 1520 cm⁻¹ (Amide II band), 1650 cm⁻¹ (Amide I band) and 3267 cm⁻¹/3291 cm⁻¹ (N-H stretch of sulfonamide).

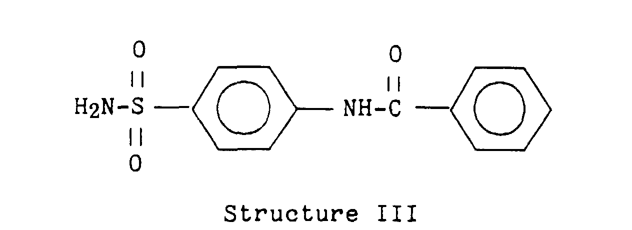

### Synthesis of Bis(4-Hydroxyphenyl)Terephthalate

Bis(4-hydroxyphenyl)terephthalate (Structure IV) was synthesized by the reaction of hydroquinone with terephthaloyl chloride through the addition of NaOH. The hydroquinone (162.7 grams, 1.48 moles) and terephthaloyl chloride (150.0 grams, 0.74 moles) were first dissolved in 750 ml of tetrahydrofuran in a two liter round bottom flask which was stirred. The NaOH (59.1 grams, 1.48 moles) in 300 ml of deionized water was next added dropwise using an addition funnel over a one hour period and the mixture was then allowed to stir an additional two hours at ambient temperature (pH = 6). The precipitate obtained was collected by vacuum filtration and then added to 500 ml of deionized water and 1000 ml of methanol. This solution was stirred for one hour at 40-55°C and then filtered. The solids collected here were added to 1100 ml of anhydrous methanol and stirred at 40-55°C for one hour followed by a third filtration. The resultant solids were then dried in a 80°C vacuum oven. This final product (111.9 grams, yield = 43.3 percent) exhibited a sharp melting endotherm by DSC at 415°C.

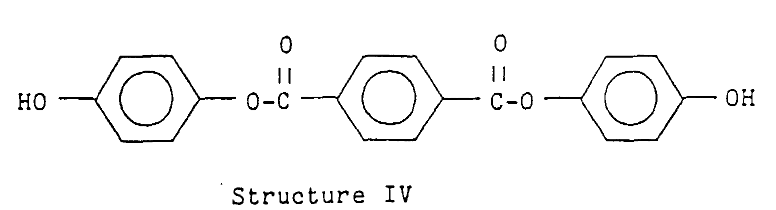

### Synthesis of N,N' -Bis(4-Hydroxyphenyl)Terephthalamide

N,N'-bis(4-hydroxyphenyl)terephthalamide (Structure V) was synthesized by the reaction of aminophenol with terephthaloyl chloride in the presence of NaHCO₃. Two moles of aminophenol (218.3 grams) and 2 moles of NaHCO₄ (168 grams) were first added to a stirred, round bottom flask containing 750 milliliters of acetone and 750 milliliters of deionized water. One mole of terephthaloyl chloride (203.0 grams) was then added over a two hour period. During the course of the terephthaloyl chloride addition, 200 additional milliliters of acetone were also added to wash down the frothy suspension caused by CO₂ evolution. After the terephthaloyl chloride addition, the precipitate produced from the reaction was collected by vacuum filtration. For purification of the precipitate obtained, one half of this material was placed in a stirred, round bottom flask containing 900 milliliters of methanol and 450 milliliters of deionized water. This suspension was heated to 56°C and then vacuum filtered. For the solids recovered from this filtration, the washing step with methanol and deionized water was repeated. The filtrant solids obtained from the second hot filtration were then added to a stirred, round bottom flask containing 1250 milliliters of methanol. This suspension was vacuum filtered after 30 minutes to recover the solids for drying. After following the preceding washing procedure for the second half of the reaction precipitate, the total solids recovered were dried at 80°C under vacuum for 5 hours. The weight of the dried solids was 325.6 grams, 93.4 percent of the theoretical yield to N,N'-bis(4-hydroxyphenyl)terephthalamide. The melting point of this final product was 405°C as determined by differential scanning calorimetry.

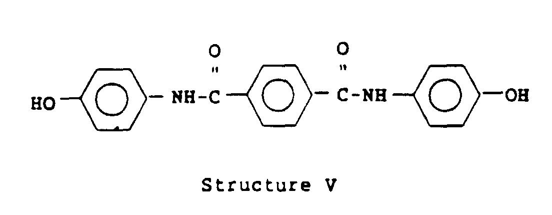

### Comparative Experiment A

### Cured Low Molecular Weight Epoxy Resin

A diglycidyl ether of bisphenol A, 149.1 grams having 24.6 percent epoxide and a 174.8 epoxide equivalent weight (EEW) was heated to 120°C. A conventional epoxy resin hardener, diethyltoluenediamine (39.51 grams, 1.04 times the stoichiometric amount of epoxide) was then added. After mixing, this resin system was poured into a mold (dimensions = 8 inches x 8 inches x 1/8 inch; 203.2 mm x 203.2 mm x 3.175 mm) heated to 120°C in a convection oven. The temperature of the oven was then increased to 180°C. After two hours at 180°C, the oven was cooled to room temperature. Following cool down, a void free, neat resin casting was obtained from the mold. Glass transition temperature and mechanical properties for this casting were then determined. These results are reported in Table I and again in Table II for comparison purposes.

### Comparative Experiment B

### Cured Advanced Epoxy Resin with Bisphenol A - Control

A diglycidyl ether of bisphenol A, 150 grams (1 equiv.) having a percent epoxide of 16.3 and an EEW of 263.8 advanced with 25.1 grams (0.25 equiv.) of bisphenol A was heated to 120°C. A stoichiometric amount (29.25 grams) of diethyltoluenediamine was then added. After mixing, this resin system was poured into a mold (dimensions = 8 inches x 8 inches x 1/8 inch; 203.2 mm x 203.2 mm x 3.175 mm) heated to 120°C in a convection oven. The temperature of the oven was then raised to 180°C. After five hours at 180°C, the oven was cooled to room temperature. Following cool down, a void free, neat resin casting was obtained from the mold. Glass transition temperature and mechanical properties for this casting were then determined. These results are reported in Table III.

### Example 1 Advancement of Diglycidyl Ether of Bisphenol A Resin with N,N'-Diphenylterephthalamide

N,N'-diphenylterephthalamide (9.00 grams) was added to a stirred, 500 ml reaction flask containing 300.1 grams of a diglycidyl ether of bisphenol A having an EEW of 177.7. A sample of this material when viewed under an optical microscope (70 X magnification) using a cross polarized light source shows dispersed crystallites of the N,N'-diphenylterephthalamide in the epoxy resin. This mixture was then heated to 248°C and held at this temperature for 1.5 hours. After cooling to room temperature, optical microscopy shows birefringent domains in the epoxy resin. The percent epoxide of this advanced resin was 22.7 based on titrametric determination. This percent epoxide corresponds to the expected value obtained by calculations based on the complete reaction of the amide hydrogens of N,N'-diphenylterephthalamide.

### Example 2 Cure of Diglycidyl Ether of Bisphenol A Epoxy Resin Advanced with N,N'-Diphenylterephthalamide

Part of the advanced epoxy resin from Example 1 (147.0 grams) was heated to 120°C. Diethyltoluenediamine (35.81 grams, 1.04 times the stoichiometric amount of epoxide) was then added. After mixing, this resin system was poured into a mold (dimensions = 8 inches x 8 inches x 1/8 inch; 203.2 mm x 203.2 mm x 3.175 mm) heated to 120°C in a convection oven. The temperature of the oven was then raised to 180°C. After two hours at 180°C, the oven was cooled to room temperature and a void free, neat resin casting was obtained from the mold. When this casting was viewed under an optical microscope (70 X magnification) using a cross polarized light source, rodlike, birefringent segments were observed which were dispersed throughout the polymer. Glass transition temperature and mechanical properties were then determined for this casting and these results are reported in Table I. Compared to the diglycidyl ether of bisphenol A epoxy resin control of Example 1, the cured resin shows improvements in tensile and flexural modulus of 4.7 and 5.9 percent, respectively.

### Example 3 Cure of Diglycidyl Ether of Bisphenol A Epoxy Resin Advanced with N,N'-Diphenylterephthalamide (Orientation of Birefringent Segments with the Application of an Electric Field)

A diglycidyl ether of bisphenol A epoxy resin advanced with N,N'-diphenylterephthalamide (143.3 grams, 22.5 percent epoxide) was first heated to 160°C. Diethyltoluenediamine (34.86 grams, 1.04 times the stoichiometric amount of epoxide) was then added. After mixing, this resin system was poured into an aluminum mold (dimensions = 8 inches x 8 inches x 1/8 inch; 203.2 mm x 203.2 mm x 3.175 mm) heated to 120°C in a convection oven. The mold consisted of two aluminum plates spaced apart by an 1/8 inch (3.175 mm) silicone rubber gasket which formed the mold cavity. Prior to pouring of the resin system into the mold, a 300 volt charge was established between the two aluminum plates using a direct current power supply. After one hour at 120°C, the oven temperature was raised to 180°C and held at this temperature for two hours. Following cool down from 180°C to room temperature, a void free, neat resin casting was obtained from the mold. When this casting was viewed under an optical microscope using a cross polarized light source, orientation of the birefringent segments produced through the advancement of diglycidyl ether of bisphenol A epoxy resin with N,N'-diphenylterephthalamide was observed. This orientation was normal to the electric field application. From this neat resin casting, glass transition temperature and mechanical properties were determined. These results are reported in Table I. Compared to the diglycidyl ether of bisphenol A epoxy resin control of Example 1, improvements in tensile and flexural modulus of 13.5 and 6.4 percent were observed, respectively.

### Example 4 Advancement of Diglycidyl Ether of Bisphenol A Epoxy Resin with N,N'-Diphenylterephthalamide and N-Phenylbenzamide

N,N'-diphenylterephthalamide (9.0 grams) and N-phenylbenzamide (3.0 grams) were added to a stirred, 500 ml reaction flask containing 300.0 grams of diglycidyl ether of bisphenol A epoxy resin (24.5 percent epoxide). This mixture was then heated to 248°C and held at this temperature for approximately 1.5 hours. The measured percent epoxide of this advanced resin was 22.4 which compared to a calculated percent epoxide of 22.3 based on complete reaction of the amide hydrogens of N,N'-diphenylterephthalamide and N-phenylbenzamide. After 1.5 hours at 248°C, the resin was cooled quickly to room temperature by pouring into a large aluminum pan. When this resin was viewed under an optical microscope (70 X magnification) using a cross polarized light source, dispersed birefringent areas were observed.

### Example 5 Cure of Diglycidyl Ether of Bisphenol A Epoxy Resin Advanced with N,N'-Diphenylterephthalamide and N-Phenylbenzamide

Part of the advanced diglycidyl ether of bisphenol A epoxy resin of Example 4 (150.1 grams) was heated to 120°C. Diethyltoluenediamine (36.20 grams, 1.04 times the stoichiometric amount of epoxide) was then added. After mixing, this resin system was poured into an aluminum mold heated to 120°C in a convection oven. The configuration of this aluminum mold was the same as in Example 3 and after pouring the resin into this mold, a 16 volt charge was established between the aluminum plates using a direct current power supply. After two hours at 120°C, the oven was raised to 180°C and held for two hours at this temperature. Following cool down of the oven from 180°C to room temperature, a void free, neat resin casting was obtained from the mold. When this casting was viewed under an optical microscope using a cross polarized light source, dispersed birefringent particles were observed in the polymer. The glass transition temperature and mechanical properties for this casting were then determined and these results are reported in Table I. Compared to the diglycidyl ether of bisphenol A epoxy resin control of Example 1, the cured resin shows an improvement in tensile and flexural modulus of 9.7 and 15.2 percent, respectively.

### Example 6 Advancement of Diglycidyl Ether of Bisphenol A Epoxy Resin with 4'-Sulfonamido-N-Phenylbenzamide

Thirty (30) grams of 4'-sulfonamido-N-phenylbenzamide were added to a stirred, 500 ml reaction flask containing 300.7 grams of diglycidyl ether of bisphenol A epoxy resin (24.4 percent epoxide). A sample of this mixture when viewed under an optical microscope (70 X magnification) using a cross polarized light source showed dispersed crystallites of 4'-sulfonamido-N-phenylbenzamide in the epoxy resin. This mixture was then heated. At 218°C, the mixture became clear and a small exotherm was observed. Following the exotherm, which peaked at 235°C, the resin was cooled to room temperature. At room temperature, no solids were observed. When viewed under the optical microscope (70 x magnification), small birefringent areas were observed in the resin. The measured percent epoxide of this resin was 18.5 which compared to a calculated percent epoxide of 18.0 based on the complete reaction of all the active hydrogens of the 4'-sulfonamido-N-phenylbenzamide.

### Example 7 Advancement of Diglycidyl Ether of Bisphenol A Epoxy Resin with 4'-Sulfonamido-N-Phenylbenzamide

Forty-five (45) grams of 4'-sulfonamido-N-phenylbenzamide were added to a stirred, 500 ml reaction flask containing diglycidyl ether of bisphenol A epoxy resin (299.8 grams, 24.8 percent epoxide). This mixture was then heated. At 220°C the mixture started to clear and a small exotherm was observed. Following the exotherm, which peaked at 248°C, the resin was cooled to room temperature. At room temperature, no solids were observed in the resin. When viewed under an optical microscope (70 X magnification) using a cross polarized light source, small birefringent areas could be seen. The titrated percent epoxide of this advanced resin was 16.3 which compared to a calculated percent epoxide of 15.5 based on the complete reaction of all the active hydrogens of the 4-sulfonamido-N-phenylbenzamide.

### Example 8 Cure of Diglycidyl Ether of Bisphenol A Epoxy Resin Advanced with 14'-Sulfonamido-N-Phenylbenzamide

Part of the resin obtained from Example 6 (145.8 grams) was heated to 120°C. Diethyltoluenediamine (29.1 grams, 1.04 times the stoichiometric amount of epoxide) was then added. After mixing, this resin system was poured into a mold (dimensions = 8 inches x 8 inches x 1/8 inch; 203.2 mm x 203.2 mm x 3.175 mm) heated to 120°C in a convection oven. The temperature of the oven was then raised to 180°C and held at this temperature for two hours. Following cool down of the oven from 180°C to room temperature, a void free, neat resin casting was obtained from the mold. The glass transition temperature and mechanical properties of this casting were then determined and these results are reported in Table II. Compared to the diglycidyl ether of bisphenol A epoxy resin control of Example 1, this cured resin showed improvements in tensile and flexural modulus of 10.9 and 9.3 percent, respectively.

### Example 9 Cure of Diglycidyl Ether of Bisphenol A Epoxy Resin Advanced with 4'-Sulfonamido-N-Phenyl-benzamide (Orientation of Birefringent Segments with the Application of an Electric Field)

Part of the resin obtained from Example 6 (174.8 grams) was heated to 120°C. Diethyltoluenediamine (30.82 grams, 1.04 times the stoichiometric amount of epoxide) was then added. After mixing, this resin system was poured into an aluminum mold heated to 120°C in a convection oven. The configuration of this mold was the same as in Example 3 and after pouring of the resin, a 16 volt charge was established between the aluminum plates using a direct current power supply. After two hours at 120°C, the oven temperature was raised to 180°C. After two hours at 180°C, the oven was cooled to room temperature and a void free, neat resin casting was obtained from the mold. When this casting was viewed under an optical microscope (120 X magnification) using a cross polarized light source, birefringent fibers were observed in the polymer. The glass transition temperature and mechanical properties for this casting were then determined and these results are reported in Table II. Compared to the diglycidyl ether of bisphenol A epoxy resin control of Example 1, this cured resin shows improvements in tensile and flexural modulus of 13.5 and 11.3 percent, respectively.

### Example 10 Cure of Diglycidyl Ether of Bisphenol A Epoxy Resin Advanced with 4'-Sulfonamido-N-Phenyl-benzamide

A diglycidyl ether of Bisphenol A epoxy resin which had been advanced with 4'-sulfonamido-N-phenyl-benzamide in the same manner as Example 6 was heated to 120°C. The weight of this advanced resin, which contained 18.7 percent epoxide, was 169.9 grams. Diethyltoluenediamine (34.21 grams, 1.04 times the stoichiometric amount of epoxide) was then added. After mixing, this resin system was poured into an aluminum mold heated to 120°C in a convection oven. The configuration of this mold was the same as in Example 3. After pouring the resin into the mold, a 50 volt charge was established between the aluminum plates using a direct current power supply. After one hour at 120°C, the oven temperature was raised to 180°C. After two hours at 180°C, the oven was cooled to room temperature and a void free, neat resin casting was obtained from the mold. The glass transition temperature and mechanical properties for this casting were then determined and these results are reported in Table II. Compared to the diglycidyl ether of bisphenol A epoxy resin control of Example 1, this cured resin shows improvements in tensile and flexural modulus of 16.4 and 12.4 percent, respectively. In addition to achieving these higher moduli, the strain to failure for this polymer is equal to that of the control.

### Example 11 Cure of Diglycidyl Ether of Bisphenol A Epoxy Resin Advanced with 4'-Sulfonamido-N-Phenyl-benzamide

Part of the resin from Example 7 (174.8 grams) was heated to 120°C. Diethyltoluenediamine (30.82 grams, 1.04 times the stoichiometric amount of epoxide) was then added. After mixing, this resin system was poured into an aluminum mold heated to 120°C in a convection oven. The configuration of this mold was the same as in Example 3. After pouring the resin into the mold, a 300 volt charge was established between the aluminum plates using a direct current power supply. After one hour at 120°C, the temperature of the oven containing the mold was raised to 180°C and held for two hours at this temperature. Following cool down of the oven from 180°C to room temperature, a void free, neat resin casting was obtained from the mold. The glass transition temperature and mechanical properties for this casting were then determined and these results are reported in Table III. Compared to diglycidyl ether of bisphenol A epoxy resin advanced with bisphenol A (Comparative Experiment B), this cured resin shows improvements in tensile and flexural modulus of 17.9 and 18.5 percent, respectively.

### Example 12 Advancement of Diglycidyl Ether of Bisphenol A Epoxy Resin with Bis(4-Hydroxyphenyl)Terephthalate Followed by Cure with Diethyltoluenediamine

Bis(4-hydroxyphenyl)terephthalate (9.01 grams) was mixed into 50.0 grams of diglycidyl ether of bisphenol A epoxy resin containing 2500 ppm tetrabutylphosphonium acetate·acetic acid complex (70 weight percent in methanol) catalyst. This mixture, which was contained in a stirred flask, was then heated to 140°C. Prior to heating, differential scanning calorimetry analysis of this mixture showed a reaction exotherm beginning at 120°C (peak temperature = 170°C, ΔH = -64 joules/gram). After three hours at 140°C, the temperature was reduced to 120°C. The resin at this point contained dispersed crystalline segments as observed by optical microscopy (70 X magnification) using a cross polarized light source. Diethyltoluenediamine (10.82 grams, 1.04 times the calculated stoichiometric amount of epoxide remaining after complete advancement) was then added. After mixing, this resin system was poured into an aluminum mold heated to 120°C in a convection oven. The mold used was of the same configuration as used in Example 3. After pouring the resin into the mold, a 7 volt charge was applied between the two aluminum plates using a direct current power supply. The oven temperature was then raised to 180°C where it was maintained for four hours. Following cool down of the oven from 180°C to room temperature, a void free, translucent casting was obtained from the mold. The glass transition temperature of this polymer was 131°C as determined by differential scanning calorimetry which also indicates no additional reactivity to 300°C. The flexural strength and modulus for the casting were 17,680 psi and 463 ksi, respectively. Compared to diglycidyl ether of bisphenol A epoxy resin advanced with bisphenol A (Comparative Experiment B), the flexural modulus obtained represents a 16.9 percent improvement.

### Example 13 Advancement of the Diglycidyl Ether of Bisphenol A with N,N'-Bis(4-hydroxyphenyl)terephthalamide and Preparation of a Compression Molded Phenoxy Resin Casting

N,N'-Bis(4-hydroxyphenyl)terephthalamide (30.7 grams; 0.176 hydroxyl equivalent) was blended into an equivalent amount of the diglycidyl ether of bisphenol A (30.0 grams; EEW = 170.3; 0.176 epoxide equivalent) which contained 4500 ppm tetrabutylphosphonium acetate·acetic acid complex (70 weight percent in methanol) catalyst. This blend was then placed in a 130°C convection oven where it was stirred approximately every 5 minutes. Differential scanning calorimetry analysis of a sample of this blend showed a reaction exotherm (ΔH = -120 joules/gram) with an onset temperature of 160°C. The peak temperature of this exotherm was 240°C. After 30 minutes at 130°C, the oven temperature was increased to 180°C over a 1.5 hour period during which time periodic stirring was continued. After 30 minutes at 180°C, the thickened resin was removed from the oven and cooled to approximately 0°C. The cooled, solid resin was then ground to a fine powder. For the preparation of a neat resin casting, part of this powder (54 grams) was placed in a compression mold (dimensions = 4 inches x 4 inches x 0.125 inch; 101.6 mm x 101.6 mm x 3.18 mm). This compression mold was next transferred to a mechanical press heated to 220°C. In the press, pressure (1680 psi) was applied to the mold during the first 5 minutes. After 1.5 hours at 220°C, the temperature of the press was increased to 240°C where it was maintained for 1.5 hours before cooling to room temperature. At room temperature, an opaque, neat resin casting was obtained from the mold. The melting point of this polymer was 378°C as determined by differential scanning calorimetry. The flexural strength and modulus of the neat resin casting obtained were 8440 psi and 713 ksi, respectively.

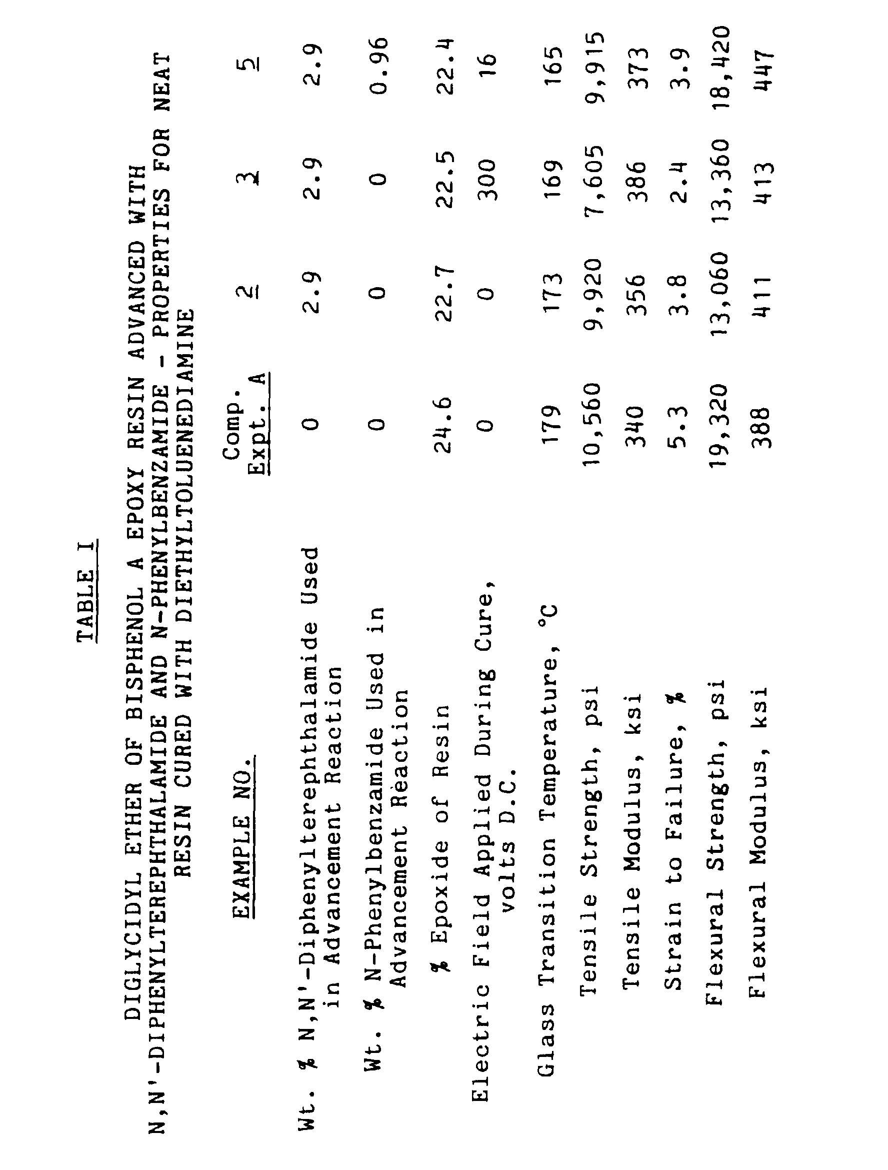

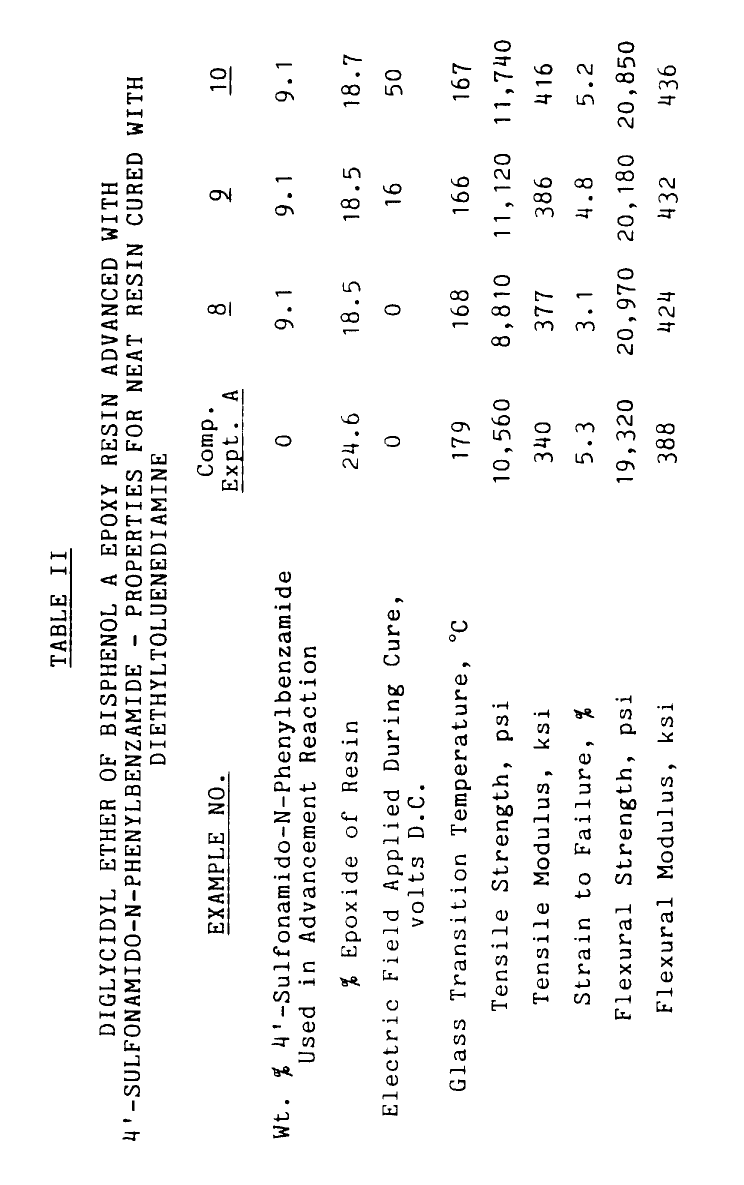

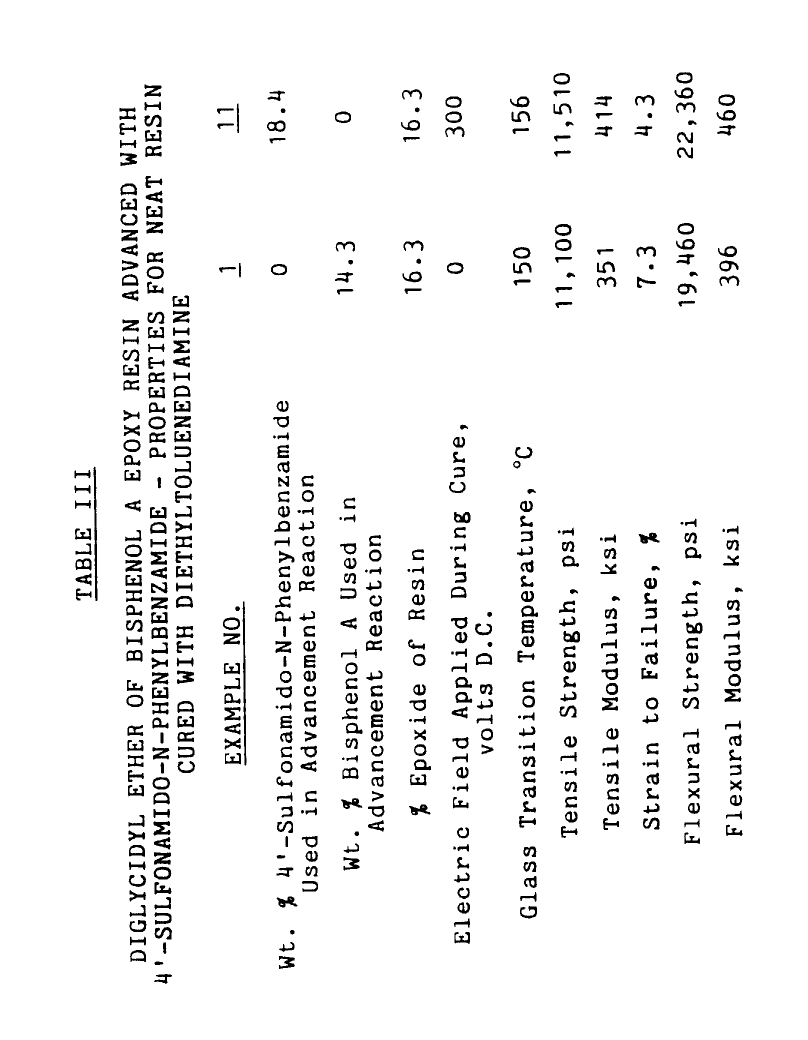

## Claims

1. An advanced epoxy resin compound prepared by reacting (A) at least one epoxy resin having an average of more than one vicinal epoxy group per molecule with (B) at least one compound having an average of more than one active hydrogen atom per molecule represented by the following formulas I or III: 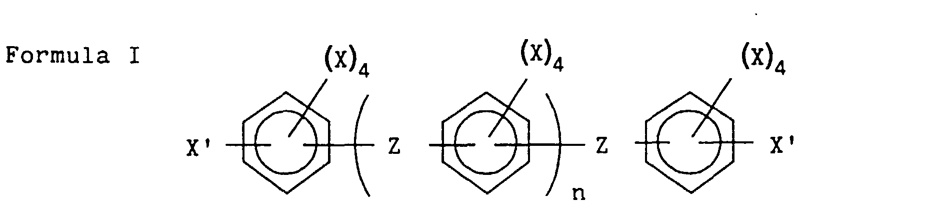 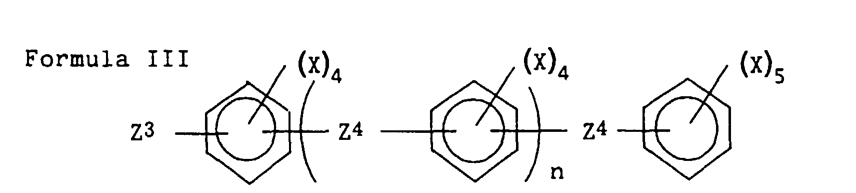 wherein each X is independently hydrogen, a hydrocarbyl or hydrocarbyloxy group having from 1 to 12, preferably from 1 to 6, most preferably from 1 to 4 carbon atoms, a halogen atom, -NO₂ or -C≡N; each X' is independently a hydroxyl group, a carboxylic acid group or the group represented by the following formula IV: 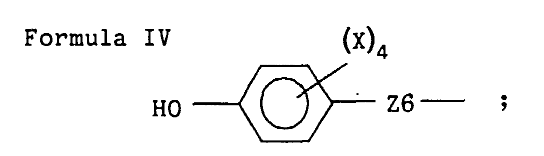 each Z or Z⁴ is dependently -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂-, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, a direct single bond when n≧1, 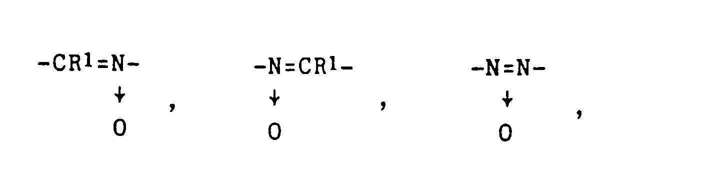 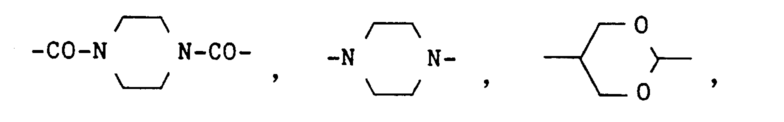 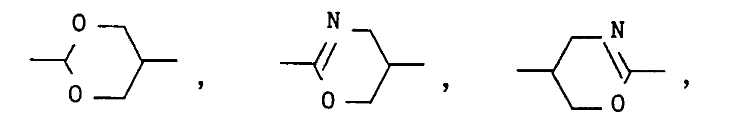 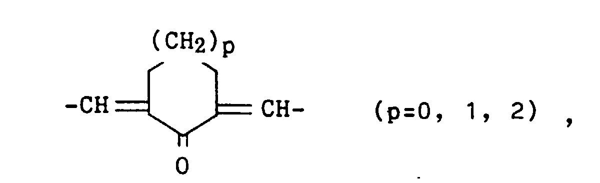 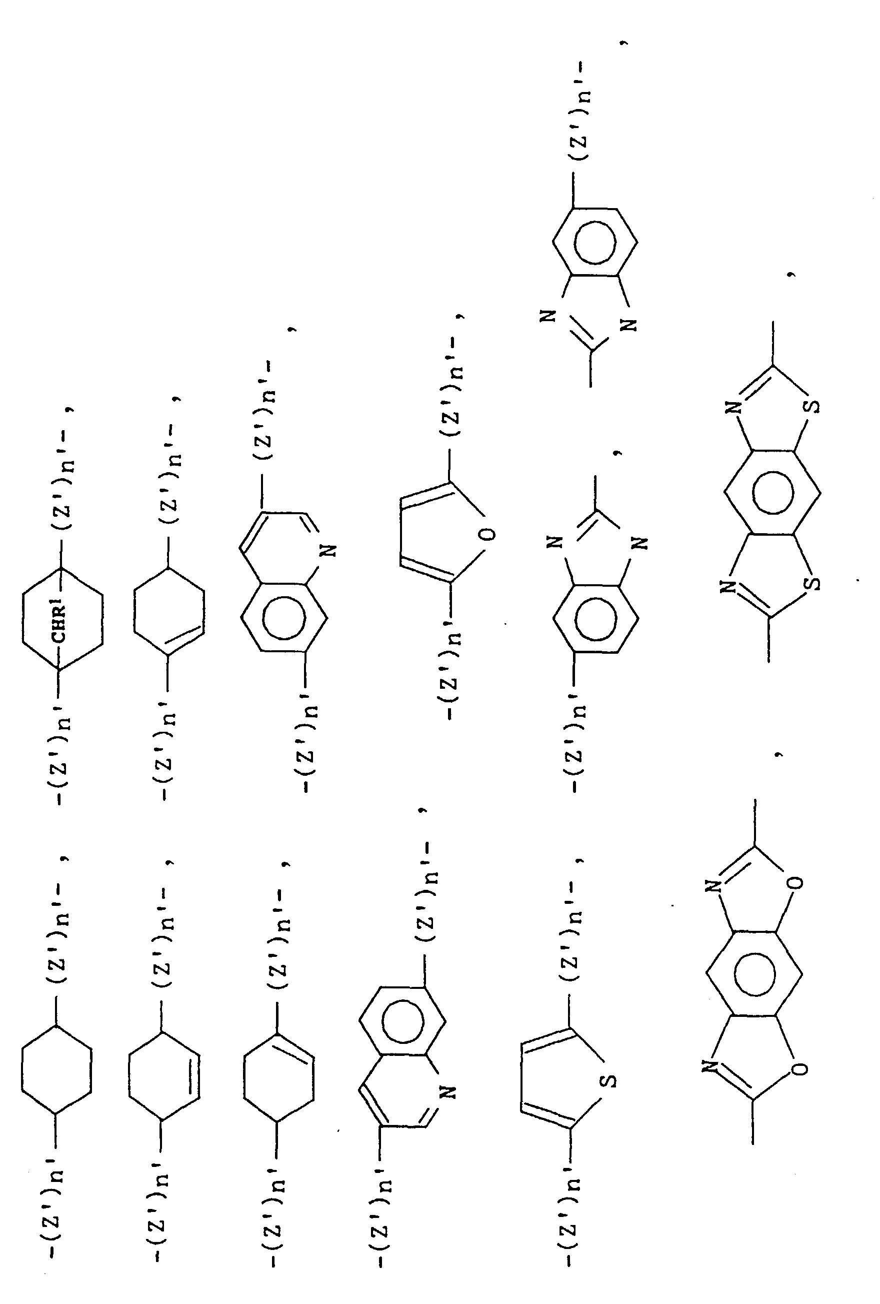 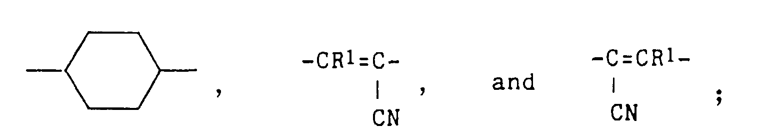 Z⁴ having also the meanings -CR¹=N- or -N=CR¹- or direct single bond; Z' is independently -O-CO-, -CO-O-, -NR¹-CO-, -CO-NR¹-; each n' is independently zero or 1; R¹ is independently a hydrogen atom or an alkyl group having from 1 to 4 carbon atoms; Z⁶ is a divalent hydrocarbyl group having from 1 to 12, preferably from 1 to 6, more preferably from 1 to 4 carbon atoms; -SO-, -SO₂-, -S-, -S-S-, -O-, or -CO-;
Z³ is NH₂-, NH₂-SO₂-, NH₂-CO-, or NH₂-Z⁵-O-;
Z⁵ is an alkyl or cycloalkyl group having from 1 to 10, preferably from 1 to 6, more preferably from 1 to 3 carbon atoms; Z⁷ is the same as Z⁴ with the proviso that it can also independently be a divalent hydrocarbyl group having from 1 to 4, carbon atoms, -SO-, -SO₂-, -S-, -S-S-, -O-, or -CO-; and n has an average value of zero to 6; with the proviso that (a) at least 80 percent of the Z and X' groups are in the para position with respect to each other in formula I and (b) at least 80 percent of the Z³ and Z⁴ groups are in the para position with respect to each other in formula III; and wherein components (A) and (B) are employed in amounts which provide a ratio of active hydrogen atoms per vicinal epoxy group of from 0.01:1 to 1.05:1.

2. An advanced epoxy resin compound of Claim 1 wherein component (B) is 4'-sulfonamido-N-phenyl-benzamide or N,N'-bis(4-hydroxylphenyl)terephthalamide.

3. An advanced epoxy resin compound of Claim 1 or 2 wherein component (A) is an epoxy resin represented by the following formulas VI, VII, VIII, IX or X: 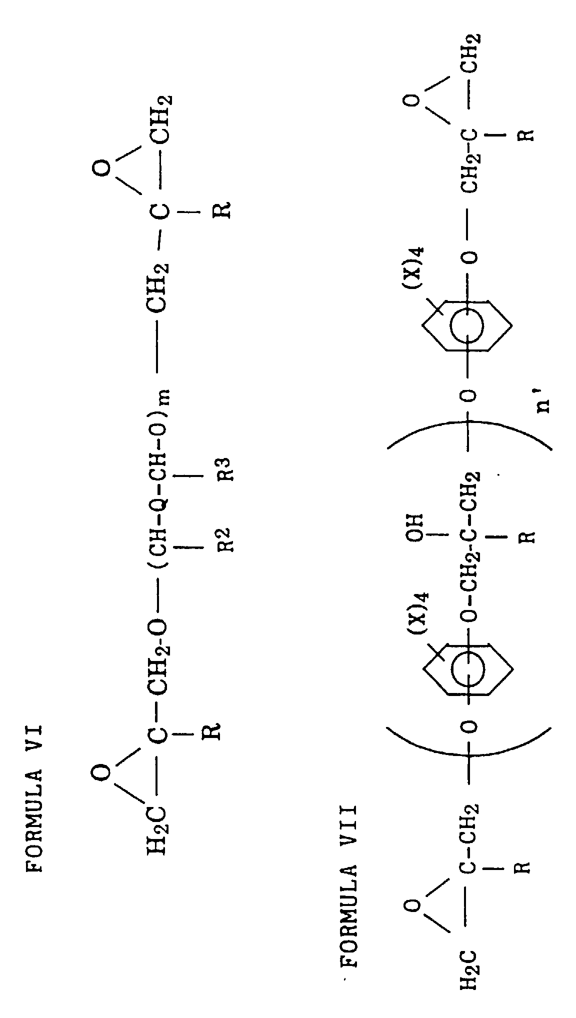 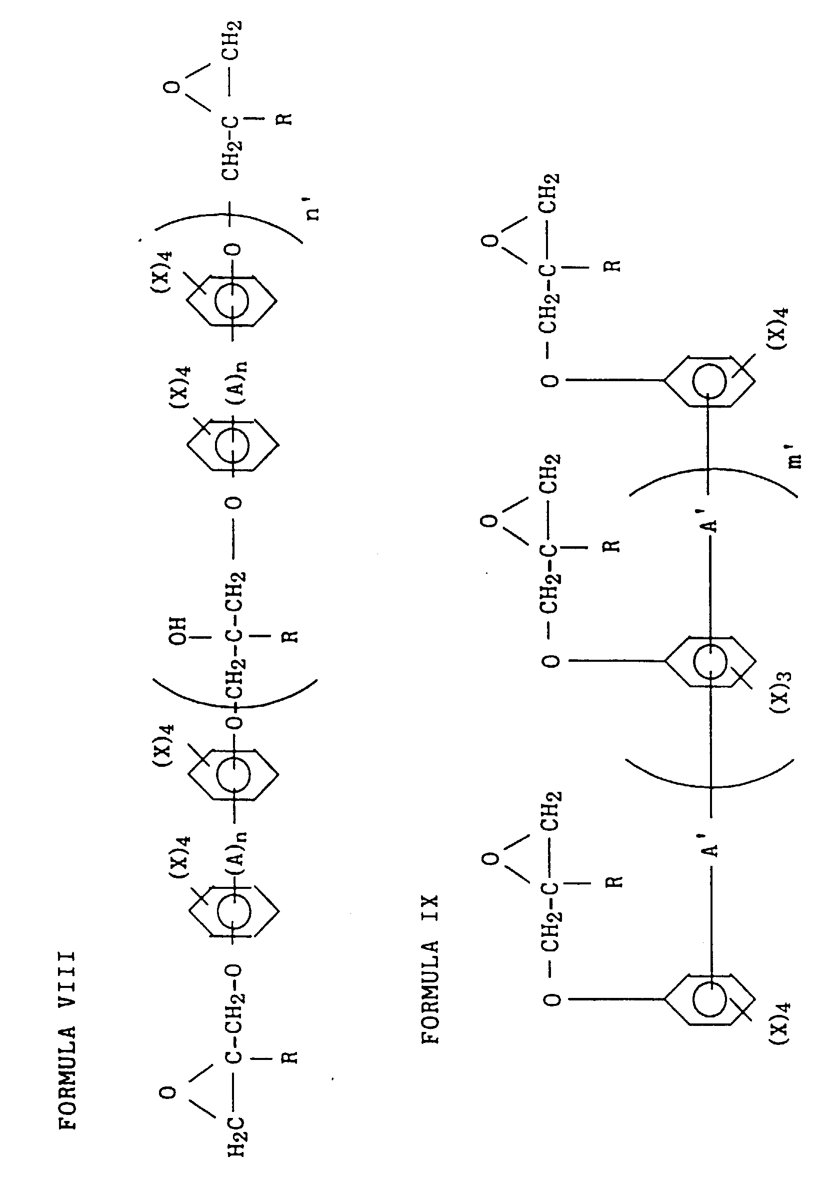 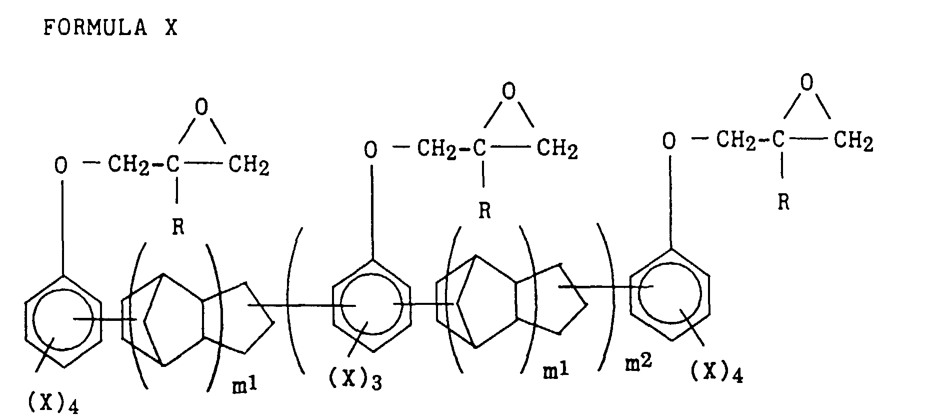 wherein each A is independently a divalent hydrocarbyl group having from 1 to 12 carbon atoms, -O-, -S-, -S-S-, -SO-, -SO₂-, or -CO-; each A' is independently a divalent hydrocarbon group having from 1 to 6, preferably from 1 to 3 carbon atoms; Q is a single bond, -CH₂-S-CH₂-, -(CH₂)_{n¹}-, or 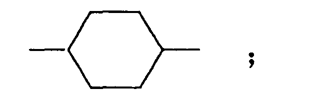 each R is independently hydrogen or an alkyl group having from 1 to 4 carbon atoms; each R² and R³ is independently hydrogen, a hydrocarbyl or halohydrocarbyl group having from 1 to 6 carbon atoms; each X is independently hydrogen, a hydrocarbyl or hydrocarbyloxy group having from 1 to 12 carbon atoms, a halogen atom, -NO₂ or -C≡N; m has a value from 1 to 10; m' has a value from 0.01 to 12; m¹ has an average value from 1 to 12; m² has a value from 1 to 12; n has a value of zero or 1; n' has an average value from zero to 3; and n¹ has an average value from 1 to 10.

4. A compound of Claim 1 wherein said advanced epoxy resin compound is oriented during processing.

5. A curable composition comprising (I) an advanced epoxy resin of Claim 1 and (II) a curing amount of a suitable curing agent or catalyst for component (I).

6. A curable composition of Claim 5 wherein said epoxy resin is oriented prior to or during curing.

7. A curable composition of Claim 6 wherein said orientation is achieved by subjecting the composition to an electric field, a magnetic field or a shear flow.

8. A product or article resulting from curing a composition comprising
(I) an advanced epoxy resin prepared by reacting
(A) at least one epoxy resin having an average of more than one vicinal epoxy group per molecule; with
(B) at least one compound having an average of more than one active hydrogen atom per molecule represented by the following formulas I, or III: 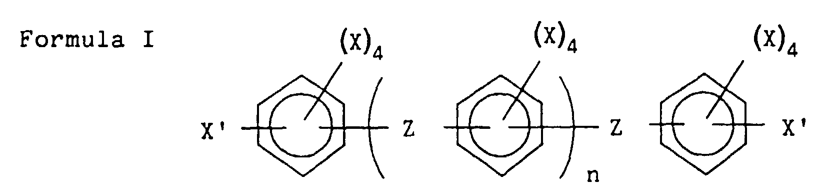 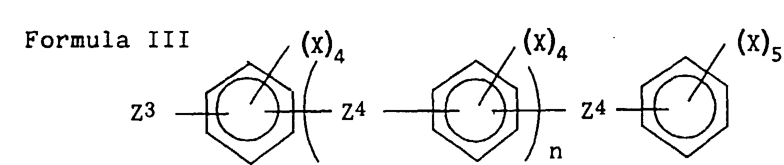 wherein each X is independently hydrogen, a hydrocarbyl or hydrocarbyloxy group having from 1 to 12, preferably from 1 to 6, most preferably from 1 to 4 carbon atoms, a halogen atom, -NO₂ or -C≡N; each X' is independently a hydroxyl group, a carboxylic acid group or the group represented by the following formula IV: 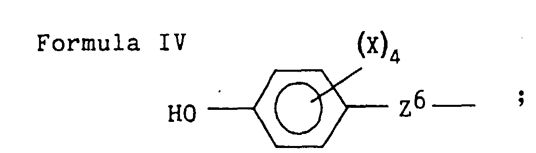 each Z or Z⁴ is independently -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, a direct single bond when n≧1, 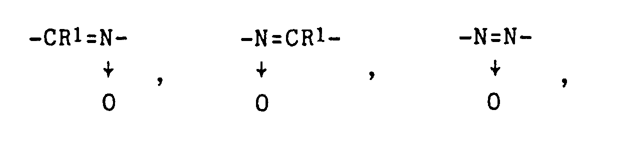 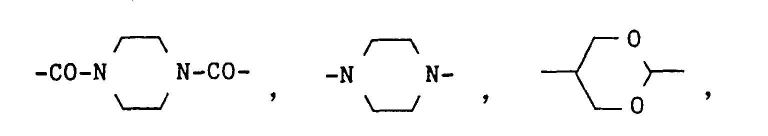 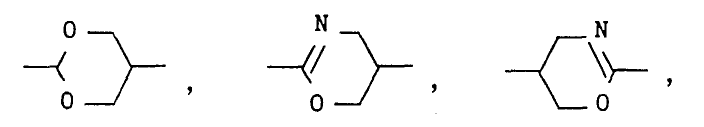 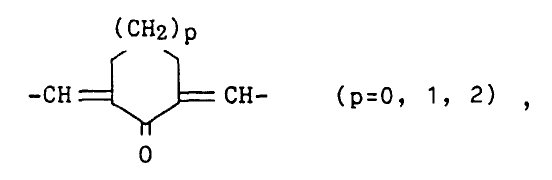 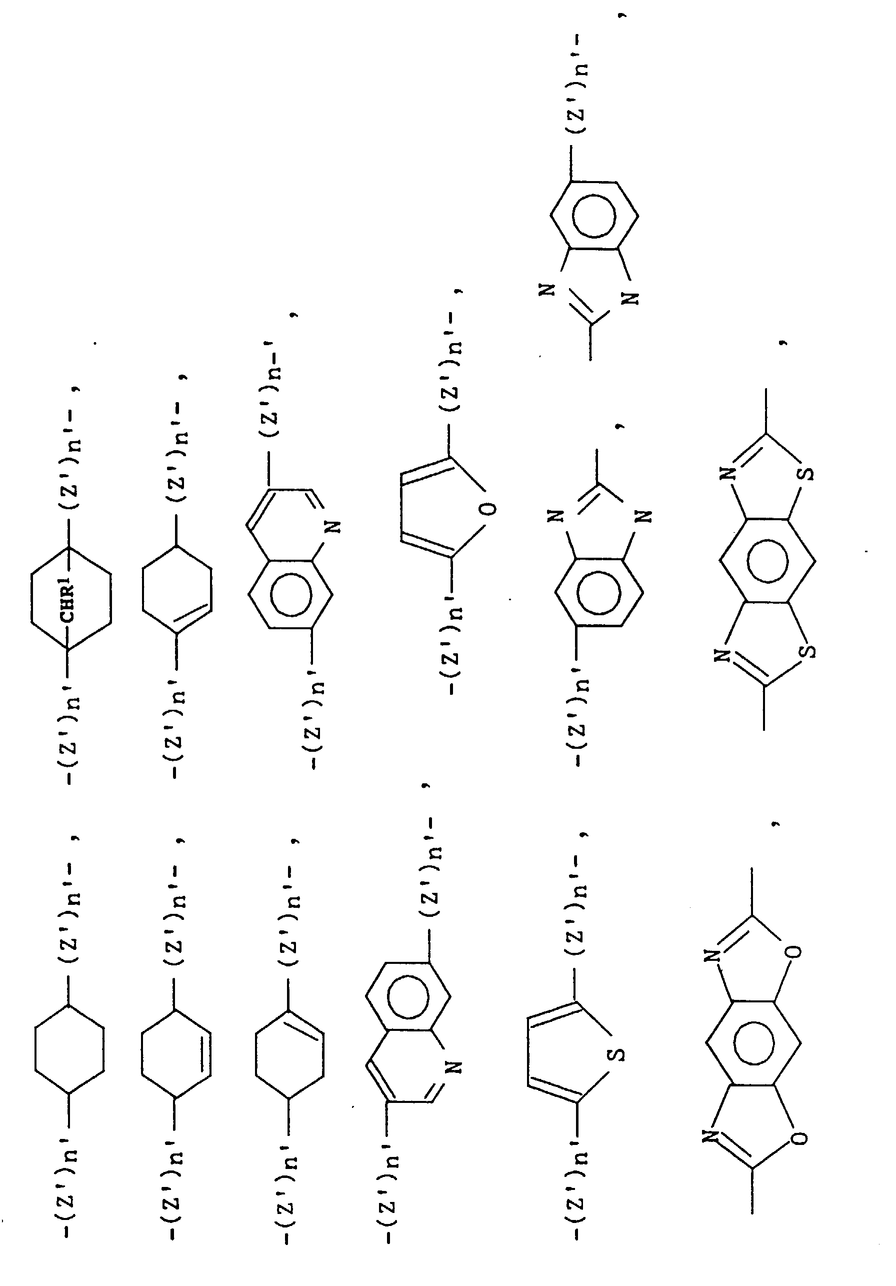 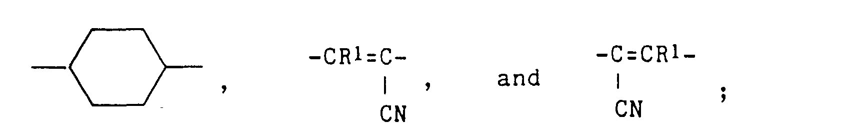 Z⁴ having also the meanings -CR¹=N- or -N=CR¹- or direct single bond
Z' is independently -O-CO-, -CO-O-, -NR¹-CO-, -CO-NR¹-; each n' is independently zero or 1; R¹ is independently a hydrogen atom or an alkyl group having from 1 to 4 carbon atoms; Z⁶ is a divalent hydrocarbyl group having from 1 to 12, preferably from 1 to 6, more preferably from 1 to 4 carbon atoms; -SO-, -SO₂-, -S-, -S-S-, -O-, or -CO-;
Z³ is NH₂-, NH₂-SO₂-, NH₂-CO-, or NH₂-Z⁵-O-;
Z⁵ is an alkyl or cycloalkyl group having from 1 to 10, preferably from 1 to 6, more preferably from 1 to 3 carbon atoms;
and n has an average value of zero to 6;
with the proviso that
(a) at least 80 percent of the Z and X' groups are in the para position with respect to each other in formula I, and
(b) at least 80 percent of the Z³ and Z⁴ groups are in the para position with respect to each other in formula III; and
wherein components (A) and (B) are employed in amounts which provide a ratio of active hydrogen atoms per vicinal epoxy group of from 0.01:1 to 0.95:1; and
(II) a curing amount of a suitable curing agent or curing catalyst for component (I).

9. A prdduct or article resulting from curing a composition of Claim 8 wherein
(i) component (A) is an epoxy resin represented by the following formulas VI, VII, VIII, IX or X: 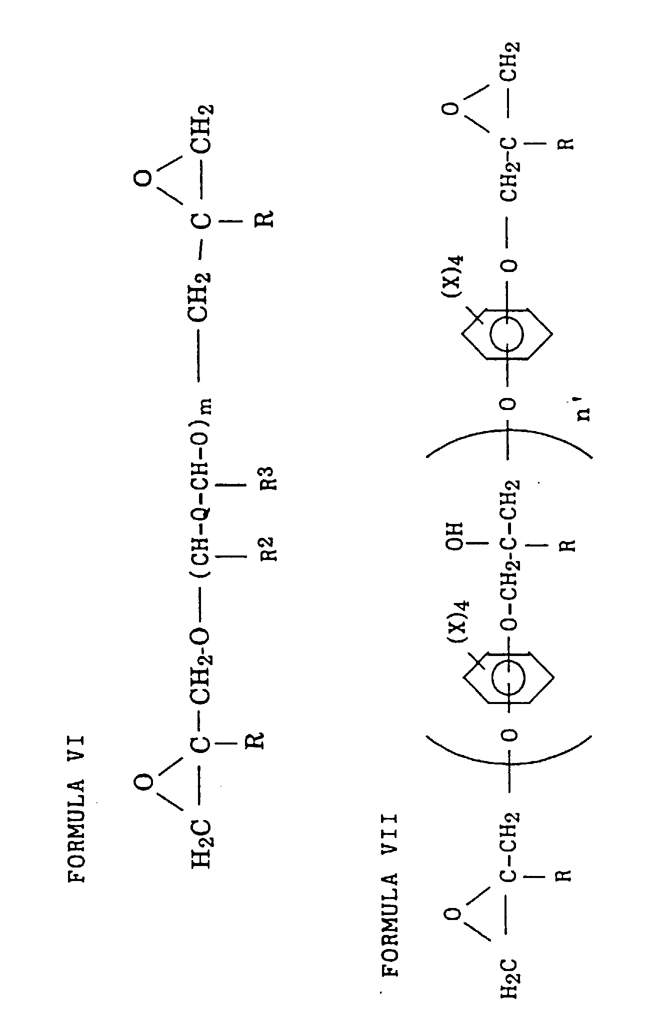 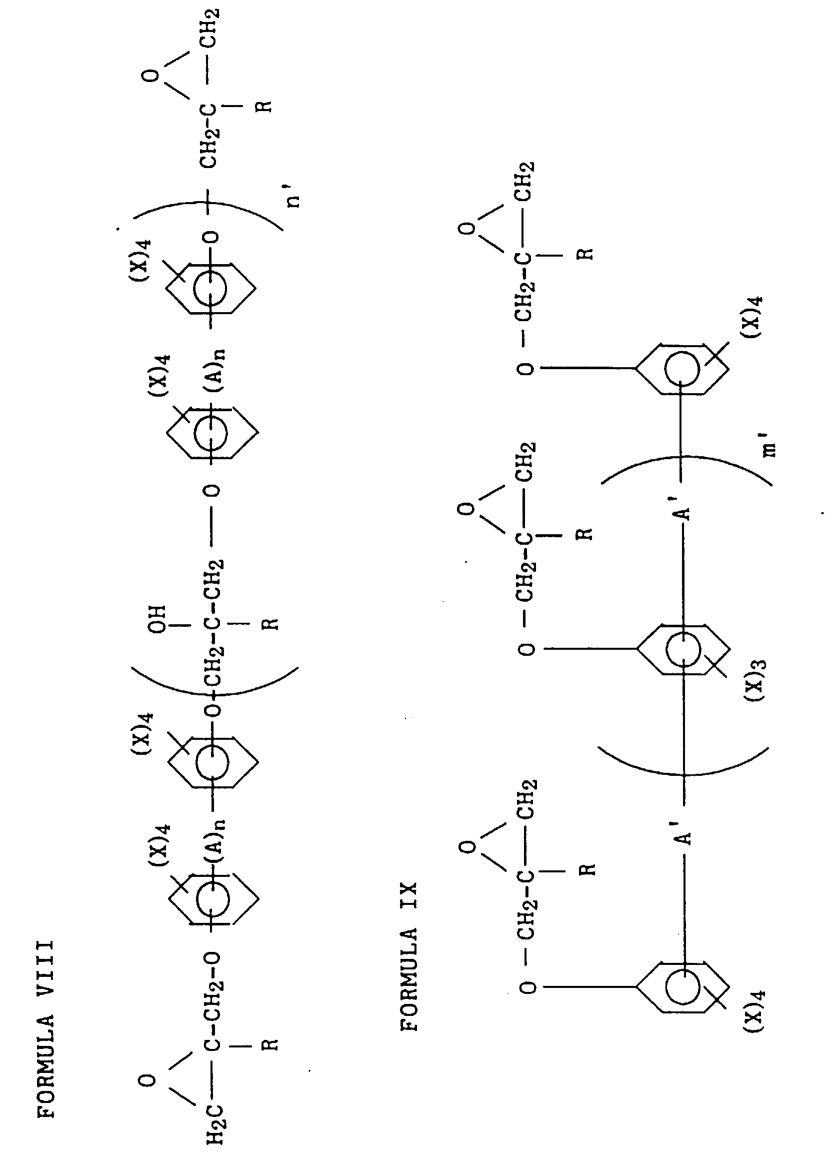 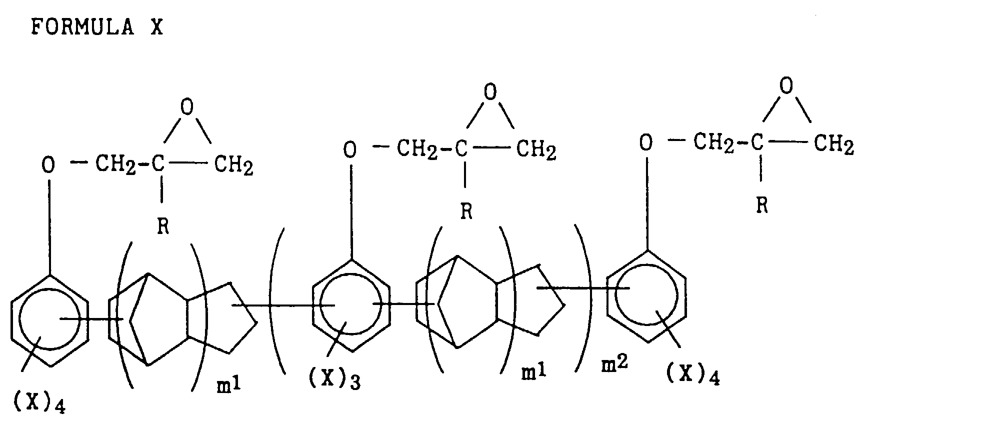 wherein each A is independently a divalent hydrocarbyl group having from 1 to 12 carbon atoms, -O-, -S-, -S-S-, -SO-, -SO₂-, or -CO-; each A' is independently a divalent hydrocarbon group having from 1 to 6, preferably from 1 to 3 carbon atoms; Q is a single bond, -CH₂-S-CH₂-, -(CH₂)_{n¹}-, or 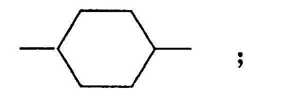 each R is independently hydrogen or an alkyl group having from 1 to 4 carbon atoms; each R² and R³ is independently hydrogen, a hydrocarbyl or halohydrocarbyl group having from 1 to 6 carbon atoms; each X is independently hydrogen, a hydrocarbyl or hydrocarbyloxy group having from 1 to 12 carbon atoms, a halogen atom, -NO₂ or -C≡N; m has a value from 1 to 10; m' has a value from 0.01 to 12; m¹ has an average value from 1 to 12; m² has a value from 1 to 12; n has a value of zero or 1; n' has an average value from zero to 3; and n¹ has an average value from 1 to 10;
(ii) component (B) is a compound represented by formula I wherein each X is independently hydrogen, a hydrocarbyl or hydrocarbyloxy group containing from 1 to 4 carbon atoms, a halogen atom or a -C≡N group; each X' is independently a hydroxyl group, a carboxylic acid group or a group represented by formula IV; each Z is independently -N=N-, -CO-NH-, -NH-CO-, -CO-O-, -O-CO-, -CR¹=CR¹- , 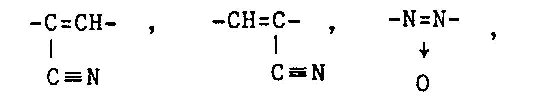 where each R¹ is independently a hydrogen atom or an alkyl group having from 1 to 4 carbon atoms; each Z⁶ is independently a divalent hydrocarbyl group having from 1 to 4 carbon atoms, -SO-, -SO₂-, -O-, or -CO-; and n has a value from zero to 6;
(iii) components (A) and (B) are employed in amounts which provide a ratio of active hydrogen atoms per vicinal epoxy group of from 0.01:1 to 0.95:1; and
(iv) component (II) is an aliphatic or cycloaliphatic compound containing more than one primary or secondary amine group per molecule, an aromatic compound containing more than one primary or secondary amine group per molecule, dicarboxylic acid anhydride, a phenol-aldehyde novolac resin, a substituted phenol-aldehyde novolac resin, an alkylolated urea-aldehyde resin, an alkylolated melamine-aldehyde resin, a guanadine, or any combination thereof.

10. A product or article resulting from curing a composition of Claim 8 wherein component (B) is bis(4-hydroxyphenyl)terephthalate.

11. A product or article resulting from curing a composition of Claim 9 wherein component (B) is N,N'-diphenylterephthalamide or a mixture of N,N'-diphenylterephthalamide and N-phenylbenzamide.

12. A product or article resulting from curing a composition of Claim 9 wherein component (B) is 4'-sulfonamido-N-phenylbenzamide.

13. The product or article of Claim 8, 9, 10, 11 or 12 wherein said epoxy resin is oriented prior to or during curing.

14. The product or article of Claim 13 wherein said orientation is achieved by subjecting the composition to an electric field, a magnetic field or a shear flow.

## Patentansprüche

1. Verlängerte Epoxyharzverbindung, hergestellt durch Umsetzen von (A) wenigstens einem Epoxyharz, das einen Durchschnitt von mehr als einer vincinalen Epoxygruppe pro Molekül besitzt, mit (B) wenigstens einer Verbindung, die einen Durchschnitt von mehr als einem aktiven Wasserstoffatom pro Molekül besitzt und durch die folgenden Formeln I oder III wiedergegeben wird: 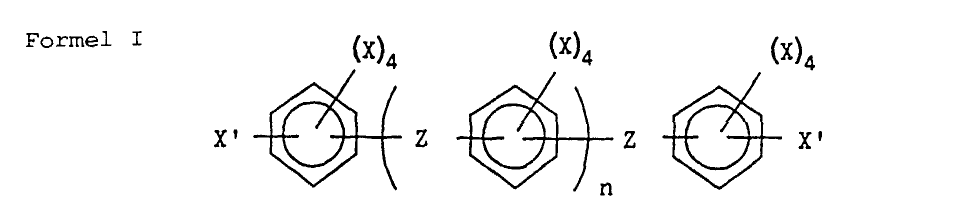 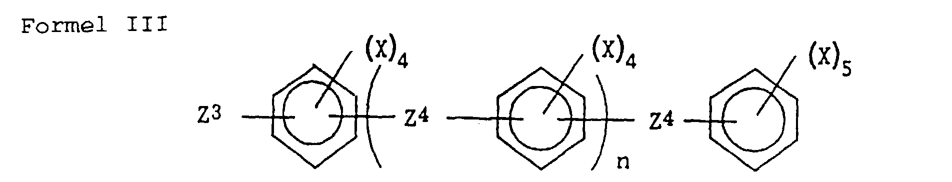 worin jedes X unabhängig Wasserstoff, eine Hydrocarbyl- oder Hydrocarbyloxygruppe mit 1 bis 12, bevorzugt 1 bis 6, am meisten bevorzugt 1 bis 4 Kohlenstoffatomen, ein Halogenatom, -NO₂ oder -C≡N ist; jedes X' unabhängig eine Hydroxylgruppe, eine Carbonsäuregruppe oder die durch die folgende Formel IV wiedergegebene Gruppe ist 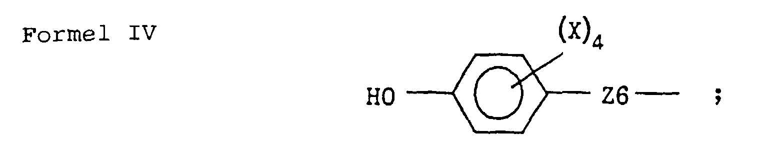 jedes Z oder Z⁴ unabhängig ist: -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂-, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, eine direkte Einzelbindung, wenn n ≥ 1, 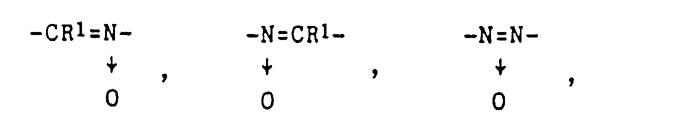 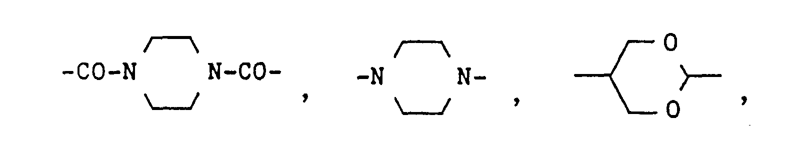 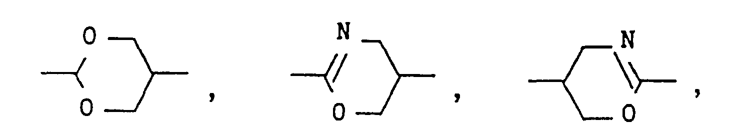 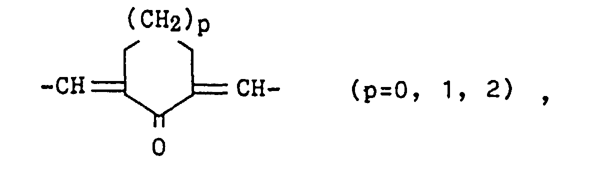 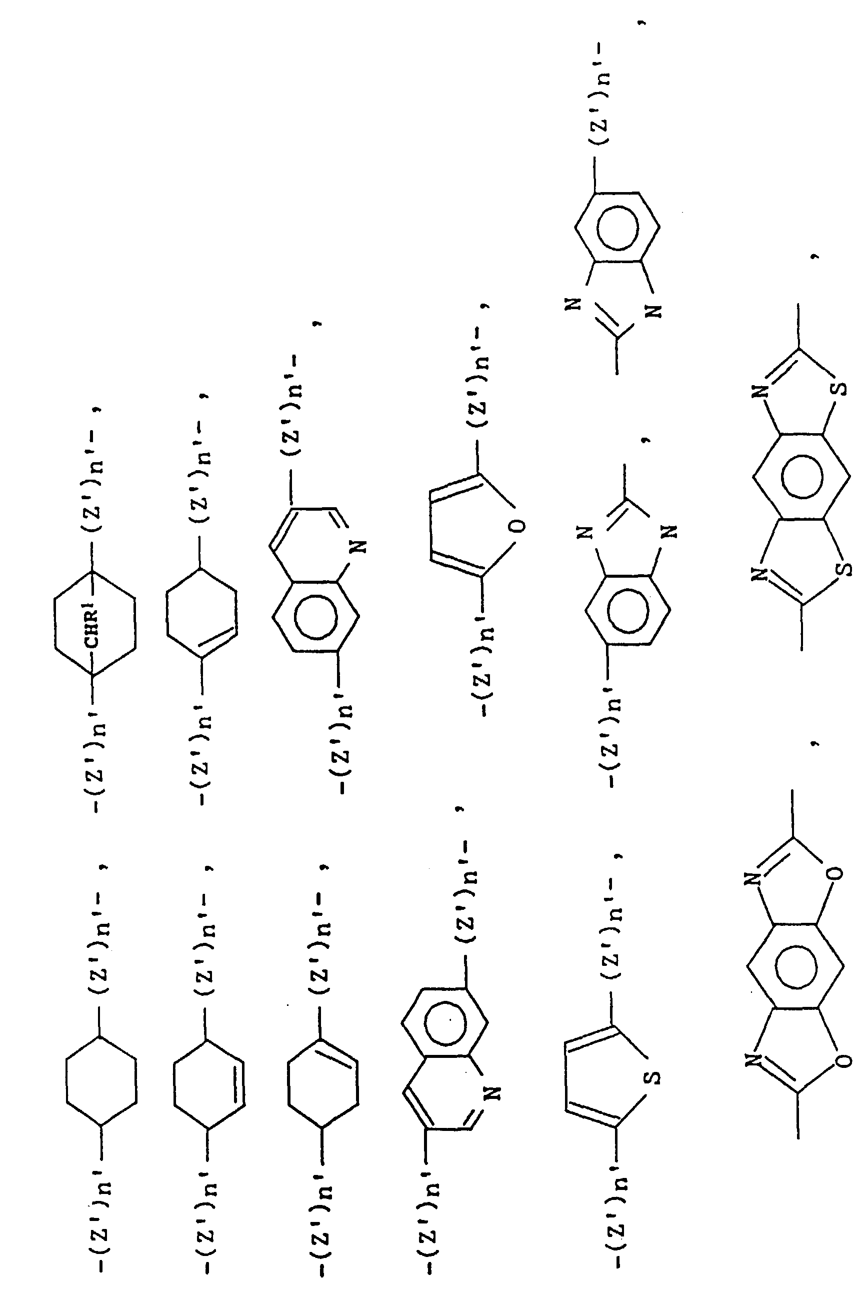 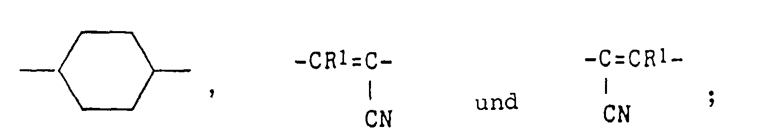 Z⁴ ebenfalls die Bedeutungen -CR¹=N- oder -N=CR¹- oder direkte Einzelbindung hat; Z' unabhängig -O-CO-, -CO-O-, -NR¹-CO-, -CO-NR¹- ist; jedes n' unabhängig null oder 1 ist; R¹ unabhängig ein Wasserstoffatom oder eine Alkylgruppe mit 1 bis 4 Kohlenstoffatomen ist; Z⁶ eine zweiwertige Hydrocarbylgruppe mit 1 bis 12, bevorzugt 1 bis 6, mehr bevorzugt 1 bis 4 Kohlenstoffatomen, -SO-, -SO₂-, -S-, -S-S-, -O- oder -CO- ist; Z³ = NH₂-, NH₂-SO₂-, NH₂-CO- oder NH₂-Z⁵-O- ist; Z⁵ eine Alkyl- oder Cycloalkylgruppe mit 1 bis 10, bevorzugt 1 bis 6, mehr bevorzugt 1 bis 3 Kohlenstoffatomen ist; Z⁷ gleich wie Z⁴ ist mit der Maßgabe, daß es ebenfalls unabhängig eine zweiwertige Hydrocarbylgruppe mit 1 bis 4 Kohlenstoffatomen, -SO-, -SO₂-, -S-, -S-S-, -O- oder -CO- sein kann; und n einen Durchschnittswert von null bis 6 hat, mit der Maßgabe, daß (a) wenigstens 80 % der Z- und X'-Gruppen in para-Stellung in Formel I zueinander stehen, und (b) wenigstens 80 % der Z³- und Z⁴-Gruppen in para-Stellung in Formel III zueinander stehen, und worin die Komponenten (A) und (B) in Mengen eingesetzt werden, welche ein Verhältnis von aktiven Wasserstoffatomen pro vicinaler Epoxygruppe von 0,01:1 bis 1,05:1 liefern.

2. Verlängerte Epoxyharzverbindung nach Anspruch 1, worin Komponente (B) 4'-Sulfonamido-N-phenylbenzamid oder N,N'-Bis-(4-hydroxyphenyl)-terephthalamid ist.

3. Verlängerte Epoxyharzverbindung nach Anspruch 1 oder 2, worin Komponente (A) ein Epoxyharz ist, das durch die folgenden Formeln VI, VII, VIII, IX oder X wiedergegeben wird: 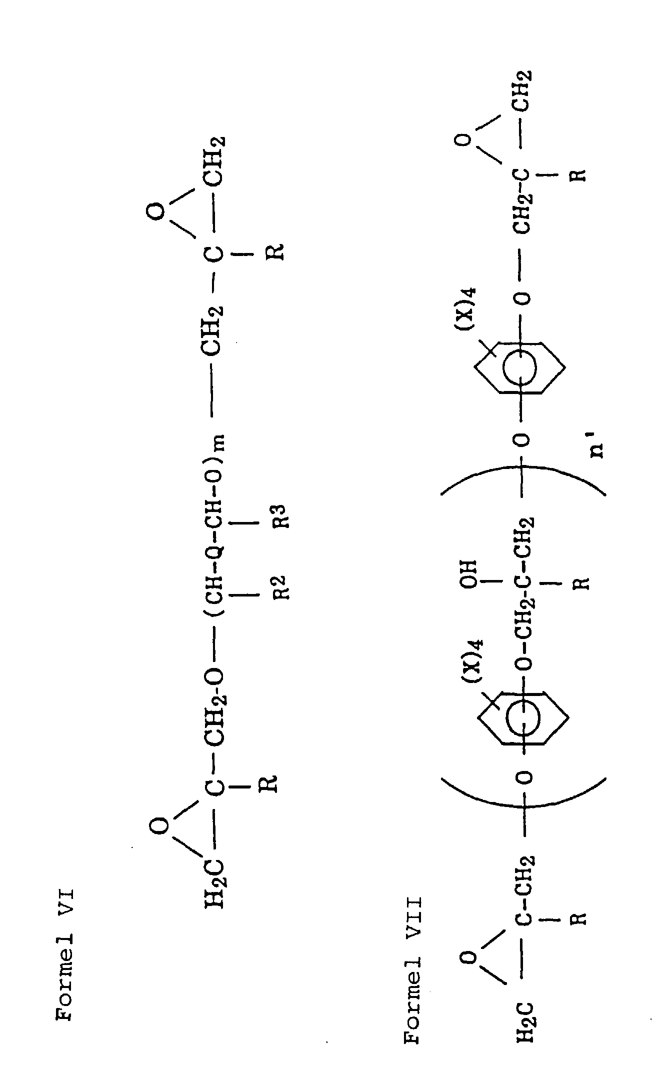 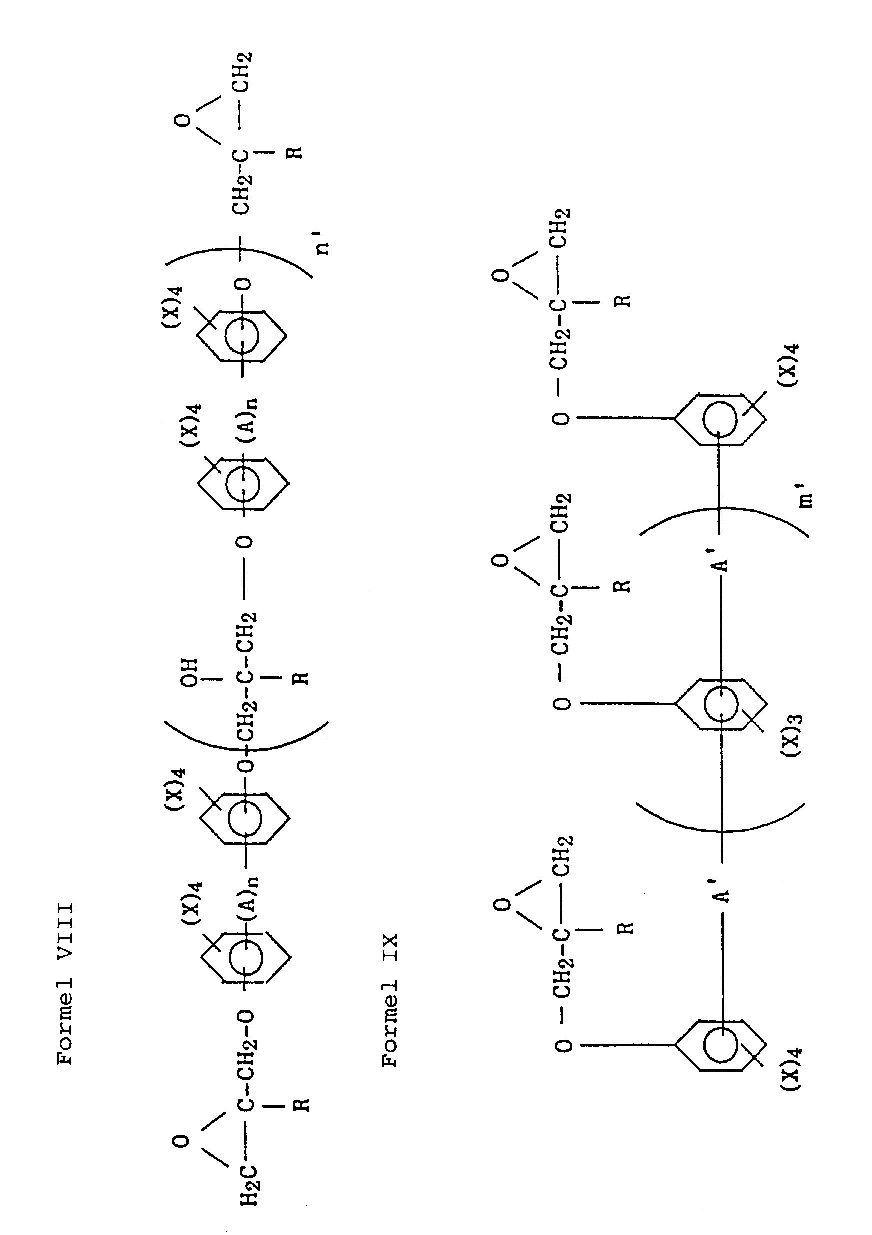 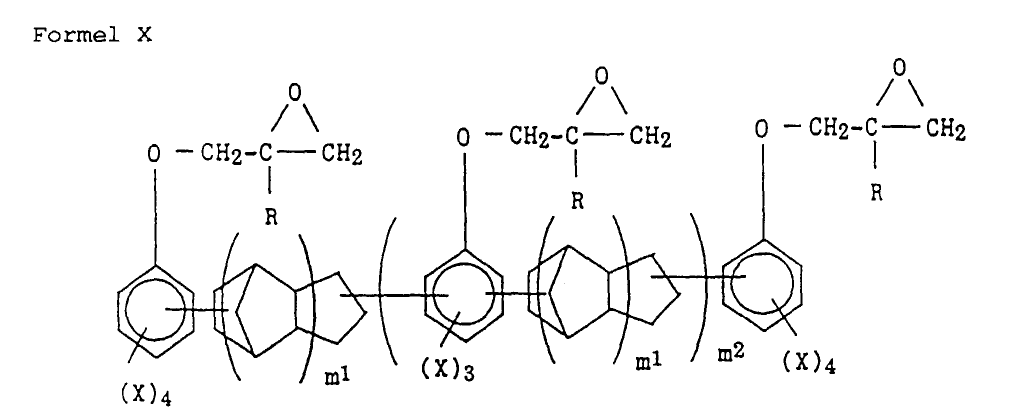 worin jedes A unabhängig eine zweiwertige Hydrocarbylgruppe mit 1 bis 12 Kohlenstoffatomen, -O-, -S-, -S-S-, -SO-, -SO₂-, oder -CO- ist; jedes A' unabhängig eine zweiwertige Kohlenwasserstoffgruppe mit 1 bis 6, bevorzugt 1 bis 3 Kohlenstoffatomen ist; Q eine Einzelbindung, -CH₂-S-CH₂-, -(CH₂)ₙ¹- oder 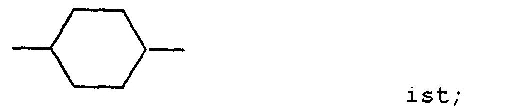 jedes R unabhängig Wasserstoff oder eine Alkylgruppe mit 1 bis 4 Kohlenstoffatomen ist; jedes R² und R³ unabhängig Wasserstoff, eine Hydrocarbyl- oder Halogenhydrocarbylgruppe mit 1 bis 6 Kohlenstoffatomen ist; jedes X unabhängig Wasserstoff, eine Hydrocarbyl- oder Hydrocarbyloxygruppe mit 1 bis 12 Kohlenstoffatomen, ein Halogenatom, -NO₂ oder -C≡N ist; m einen Wert von 1 bis 10 hat; m' einen Wert von 0,01 bis 12 hat; m¹ einen Durchschnittswert von 1 bis 12 hat; m² einen Wert von 1 bis 12 hat; n einen Wert von null oder 1 hat; n' einen Durchschnittswert von null bis 3 hat und n¹ einen Durchschnittswert von 1 bis 10 hat.

4. Zusammensetzung nach Anspruch 1, worin diese verlängerte Epoxyharzverbindung während des Verarbeitens orientiert wird.

5. Härtbare Zusammensetzung, umfassend (I) ein verlängertes Epoxyharz von Anspruch 1 und (II) eine aushärtende Menge eines geeigneten Härters oder Katalysators für Komponente (I).

6. Härtbare Zusammensetzung nach Anspruch 5, worin dieses Epoxyharz vor oder während des Aushärtens orientiert wird.

7. Härtbare Zusammensetzung nach Anspruch 6, worin diese Orientierung erreicht wird, indem die Zusammensetzung einem elektrischen Feld, einem Magnetfeld oder einer Scherströmung ausgesetzt wird.

8. Produkt oder Artikel, resultierend aus dem Aushärten einer Zusammensetzung, welche umfaßt:
(I) ein verlängertes Epoxyharz, hergestellt durch Umsetzen
(A) wenigstens eines Epoxyharzes, das einen Durchschnitt von mehr als einer vicinalen Epoxygruppe pro Molekül hat, mit
(B) wenigstens einer Verbindung, die einen Durchschnitt von mehr als einem Wasserstoffatom pro Molekül hat und durch die folgenden Formeln I oder III wiedergegeben wird: 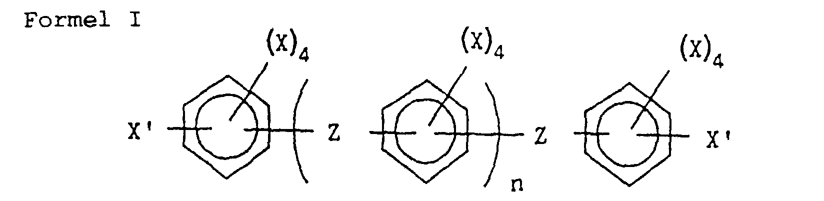 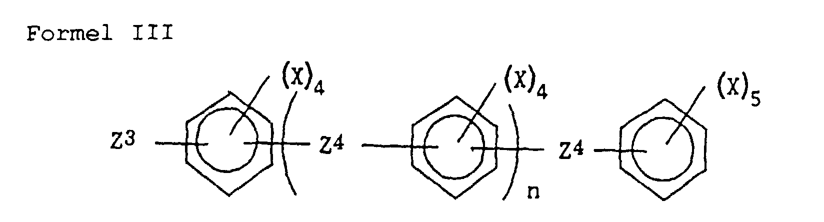 worin jedes X unabhängig Wasserstoff, eine Hydrocarbyl- oder Hydrocarbyloxygruppe mit 1 bis 12, bevorzugt 1 bis 6, am meisten bevorzugt 1 bis 4 Kohlenstoffatomen, ein Halogenatom, -NO₂ oder -C≡N ist; jedes X' unabhängig eine Hydroxylgruppe, eine Carbonsäuregruppe oder die durch die folgende Formel IV wiedergegebene Gruppe ist 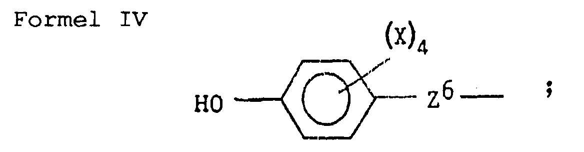 jedes Z oder Z⁴ unabhängig ist: -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂-, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, eine direkte Einzelbindung, wenn n ≥ 1, 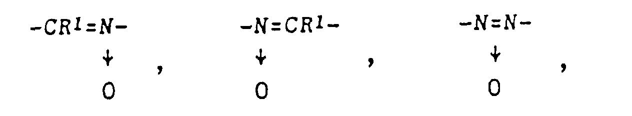 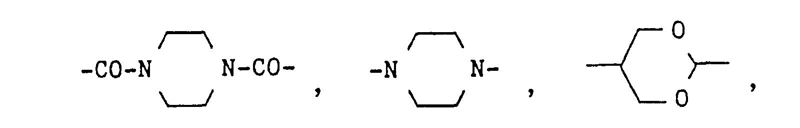 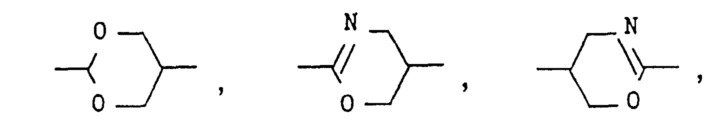 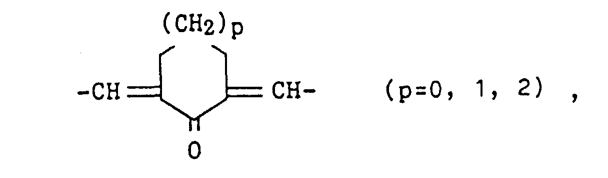 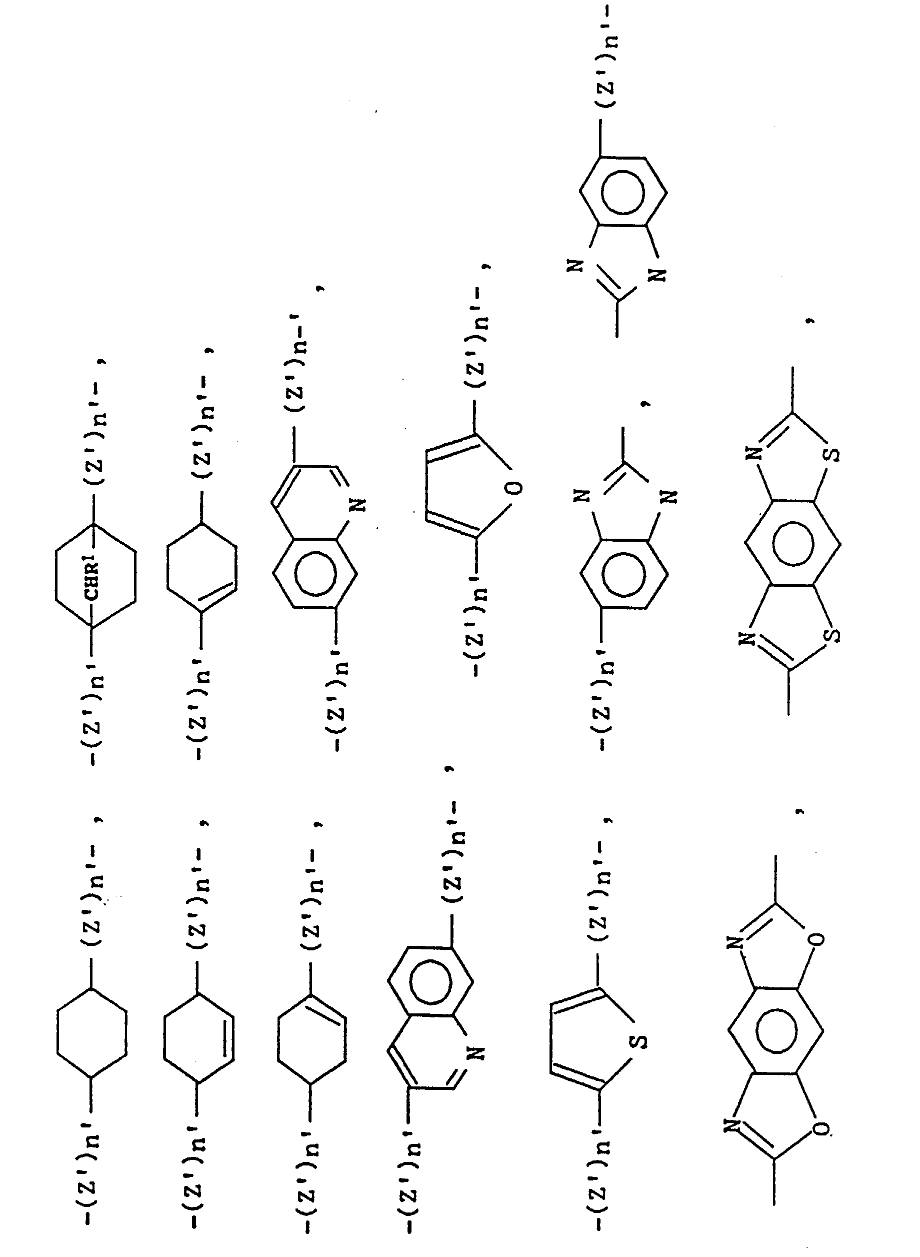 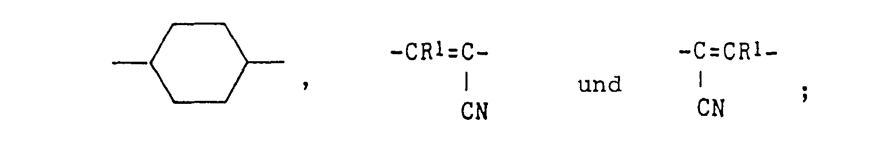 Z⁴ ebenfalls die Bedeutungen -CR¹=N- oder -N=CR¹- oder direkte Einzelbindung hat; Z' unabhängig -O-CO-, -CO-O--NR¹-CO-, -CO-NR¹- ist; jedes n' unabhängig null oder 1 ist; R¹ unabhängig ein Wasserstoffatom oder eine Alkylgruppe mit 1 bis 4 Kohlenstoffatomen ist; Z⁶ eine zweiwertige Hydrocarbylgruppe mit 1 bis 12, bevorzugt 1 bis 6, mehr bevorzugt 1 bis 4 Kohlenstoffatomen, -SO-, -SO₂-, -S-, -S-S-, -O- oder -CO- ist; Z³ = NH₂-, NH₂-SO₂-, NH₂-CO- oder NH₂-Z⁵-O- ist; Z⁵ eine Alkyl- oder Cycloalkylgruppe mit 1 bis 10, bevorzugt 1 bis 6, mehr bevorzugt 1 bis 3 Kohlenstoffatomen ist; Z⁷ gleich wie Z⁴ ist mit der Maßgabe, daß es ebenfalls unabhängig eine zweiwertige Hydrocarbylgruppe mit 1 bis 4 Kohlenstoffatomen, -SO-, -SO₂-, -S-, -S-S-, -O- oder -CO- sein kann; und n einen Durchschnittswert von null bis 6 hat, mit der Maßgabe, daß
(a) wenigstens 80 % der Z- und X'-Gruppen in para-Stellung in Formel I zueinander stehen, und
(b) wenigstens 80 % der Z³- und Z⁴-Gruppen in para-Stellung in Formel III zueinander stehen, und
worin die Komponenten (A)und (B) in Mengen eingesetzt werden, welche ein Verhältnis von aktiven Wasserstoffatomen pro vicinaler Epoxygruppe von 0,01:1 bis 0,95:1 liefern; und
(II) einer aushärtenden Menge eines geeigneten Härters oder Aushärtkatalysators für Komponente (I).

9. Produkt oder Artikel, resultierend aus dem Aushärten einer Zusammensetzung von Anspruch 8, worin
(i) Komponente (A) ein Epoxyharz ist, das durch die folgenden Formeln VI, VII, VIII, IX oder X wiedergegeben wird: 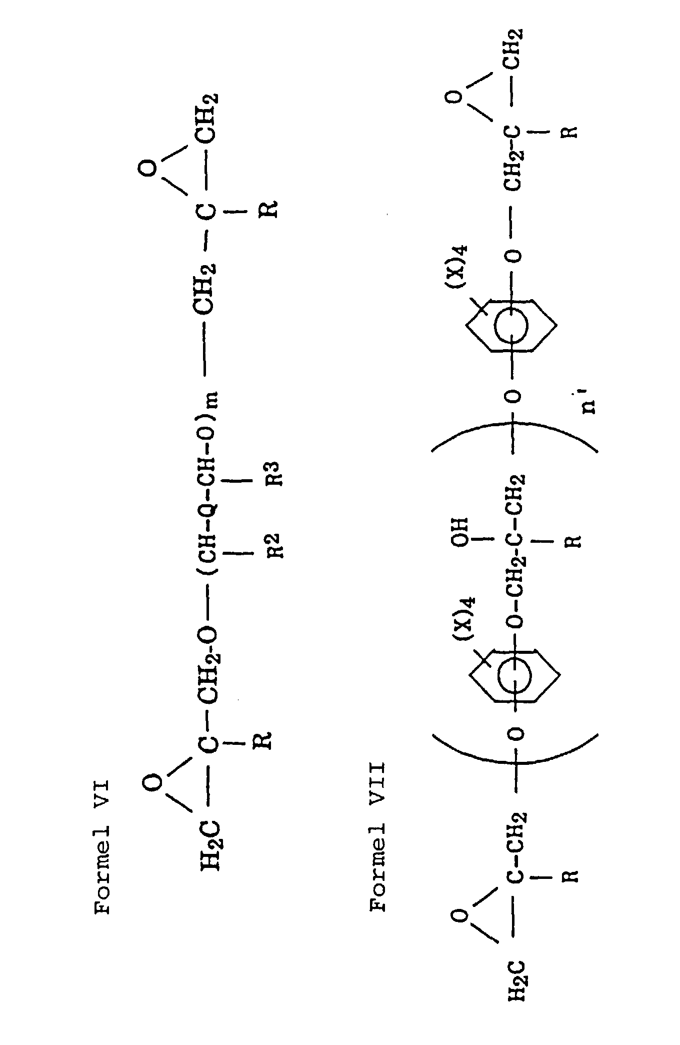 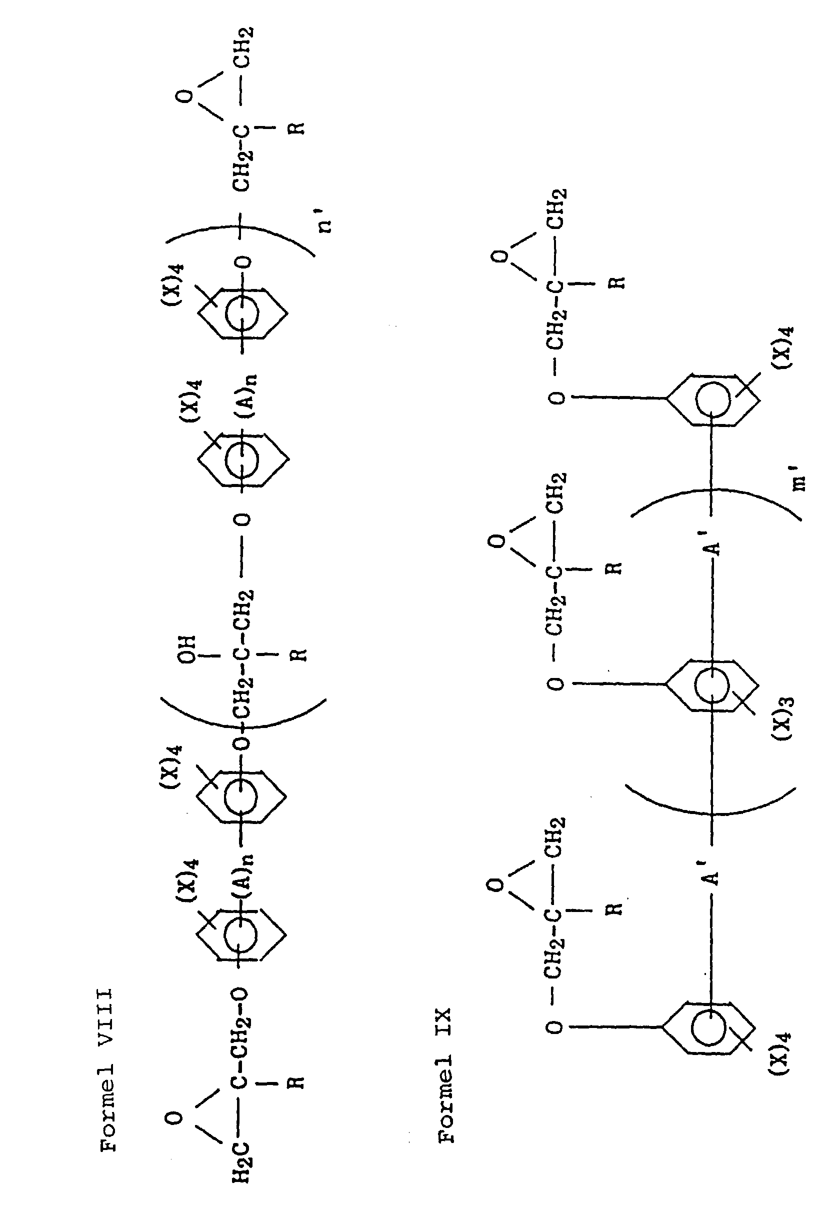 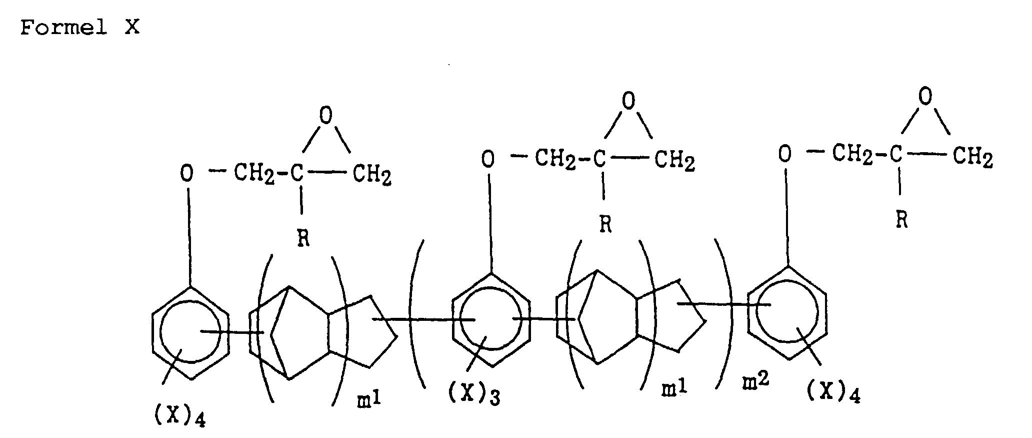 worin jedes A unabhängig eine zweiwertige Hyydrocarbylgruppe mit 1 bis 12 Kohlenstoffatomen, -O-, -S-, -S-S-, -SO-, -SO₂- oder -CO- ist; jedes A' unabhängig eine zweiwertige Kohlenwasserstoffgruppe mit 1 bis 6, bevorzugt 1 bis 3 Kohlenstoffatomen ist; Q eine Einzelbindung, -CH₂-S-CH₂-, -(CH₂)ₙ¹- oder 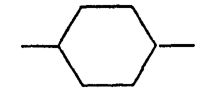 ist;
jedes R unabhängig Wasserstoff oder eine Alkylgruppe mit 1 bis 4 Kohlenstoffatomen ist; jedes R² und R³ unabhängig Wasserstoff, eine Hydrocarbyl- oder Halogenhydrocarbylgruppe mit 1 bis 6 Kohlenstoffatomen ist; jedes X unabhängig Wasserstoff, eine Hydrocarbyl- oder Hydrocarbyloxygruppe mit 1 bis 12 Kohlenstoffatomen, ein Halogenatom, -NO₂ oder -C≡N ist; m einen Wert von 1 bis 10 hat; m' einen Wert von 0,01 bis 12 hat; m¹ einen Durchschnittswert von 1 bis 12 hat; m² einen Wert von 1 bis 12 hat; n einen Wert von null oder 1 hat; n' einen Durchschnittswert von null bis 3 hat und n¹ einen Durchschnittswert von 1 bis 10 hat;
(ii) Komponente (B) eine Verbindung ist, die durch die Formel I wiedergegeben wird, worin jedes X unabhängig Wasserstoff, eine Hydrocarbyl- oder Hydrocarbyloxygruppe mit 1 bis 4 Kohlenstoffatomen, ein Halogenatom oder eine -C≡N Gruppe ist; jedes X' unabhängig eine Hydroxylgruppe, eine Carbonsäuregruppe oder eine durch die Formel IV wiedergegebene Gruppe ist; jedes Z unabhängig -N=N-, -CO-NH-, -NH-CO-, -CO-O-, -O-CO-, -CR¹=CR¹-, 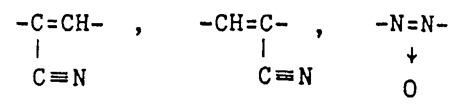 ist, worin jedes R¹ unabhängig ein Wasserstoffatom oder eine Alkylgruppe mit 1 bis 4 Kohlenstoffatomen ist; jedes Z⁶ unabhängig eine zweiwertige Hydrocarbylgruppe mit 1 bis 4 Kohlenstoffatomen, -SO-, -SO₂-, -O- oder -CO- ist und n einen Wert von null bis 6 hat;
(iii) die Komponenten (A) und (B) in Mengen eingesetzt werden, die ein Verhältnis von aktiven Wasserstoffatomen pro vicinaler Epoxygruppe von 0,01:1 bis 0,95:1 liefern; und
(iv) die Komponente (II) eine aliphatische oder cycloaliphatische Verbindung, die mehr als eine primäre oder sekundäre Amingruppe pro Molekül enthält, eine aromatische Verbindung, die mehr als eine primäre oder sekundäre Amingruppe pro Molekül enthält, Dicarbonsäureanhydrid, ein Phenol-Aldehyd-Novolakharz, ein substituiertes Phenol-Aldehyd-Novolakharz, ein alkyloliertes Harnstoff-Aldehydharz, ein alkyloliertes Melamin-Aldehydharz, ein Guanidin oder ein Kombination hiervon ist.

10. Produkt oder Artikel, resultierend aus dem Aushärten einer Zusammensetzung von Anspruch 8, worin die Komponente (B) Bis-(4-hydroxyphenyl)-terephthalat ist.

11. Produkt oder Artikel, resultierend aus dem Aushärten einer Zusammensetzung von Anspruch 9, worin die Komponente (B) N,N'-Diphenylterephthalamid oder eine Mischung von N,N'-Diphenylterephthalamid und N-Phenylbenzamid ist.

12. Produkt oder Artikel, resultierend aus dem Aushärten einer Zusammensetzung von Anspruch 9, worin die Komponente (B) 4'-Sulfonamido-N-phenylbenzamid ist.

13. Produkt oder Artikel von Anspruch 8, 9, 10, 11 oder 12, worin dieses Epoxyharz vor dem oder während des Aushärtens orientiert wurde.

14. Produkt oder Artikel von Anspruch 13, worin diese Orientierung erreicht wurde, indem die Zusammensetzung einem elektrischen Feld, einem Magnetfeld oder einer Scherströmung ausgesetzt wurde.

## Revendications

1. Composé de type résine époxyde prépolymérisée, préparé en faisant réagir (A) au moins une résine époxyde présentant en moyenne plus d'un groupe époxydique vicinal par molécule, avec (B) au moins un composé présentant en moyenne plus d'un atome d'hydrogène actif par molécule répondant à la formule suivante I ou III : 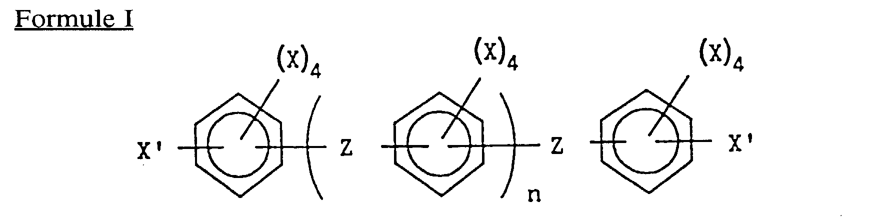 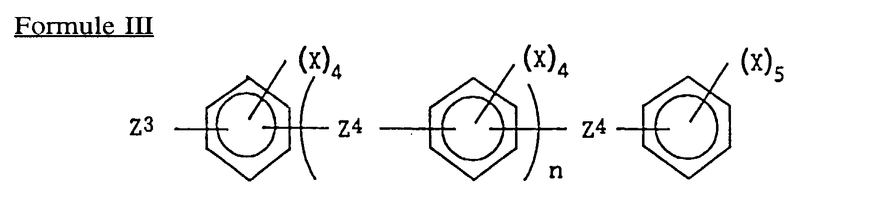 dans lesquelles chaque X représente indépendamment un atome d'hydrogène, un groupe hydrocarbyle ou hydrocarbyloxy comportant de 1 à 12, de préférence de 1 à 6, mieux encore de 1 à 4 atomes de carbone, un atome d'halogène, -NO₂ ou -C≡N ; chaque X' représente indépendamment un groupe hydroxyle, un groupe acide carboxylique ou le groupe répondant à la formule IV : 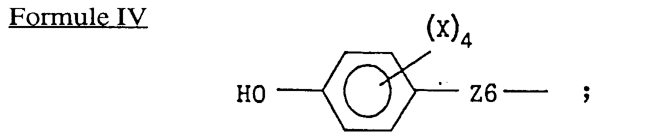 chaque Z ou Z⁴ représente indépendamment -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂-, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, une simple liaison directe quand n≥1, 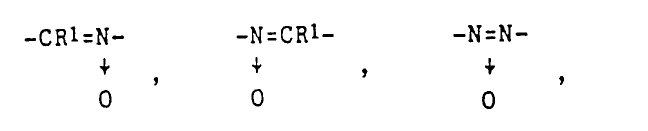 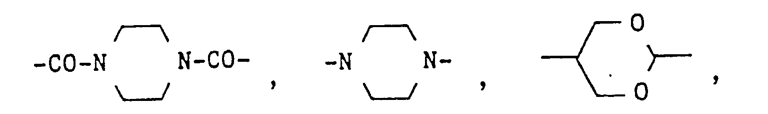 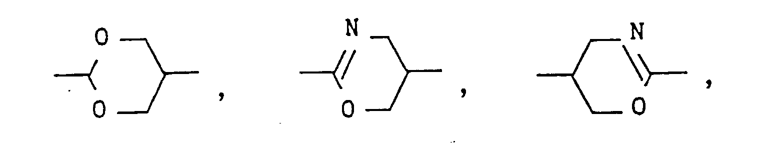 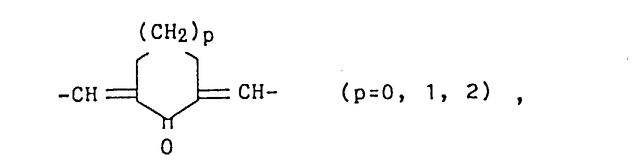 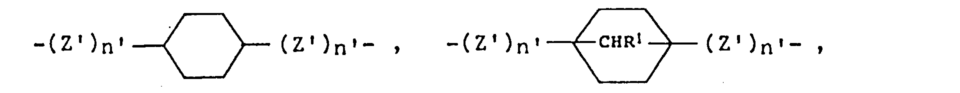 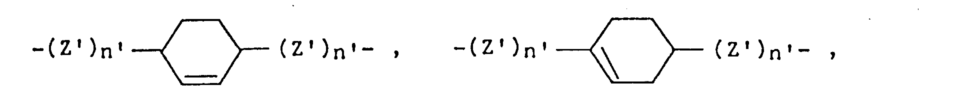 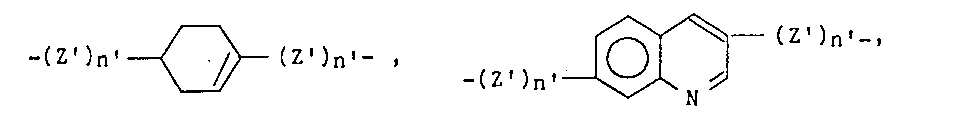 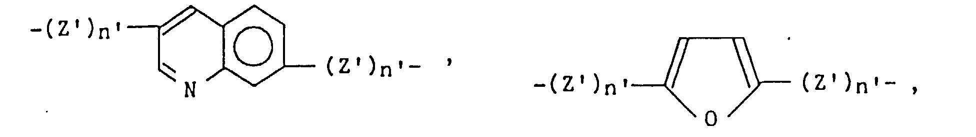 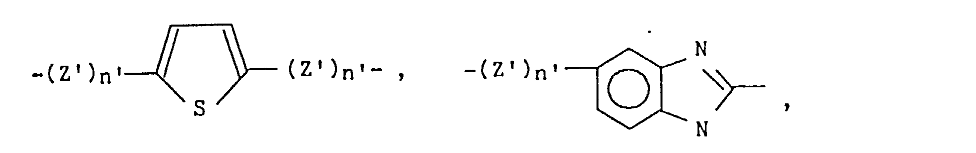 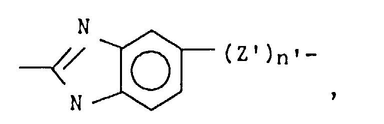 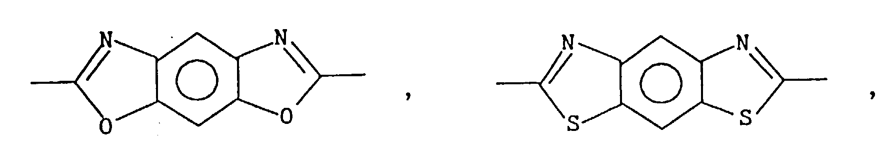 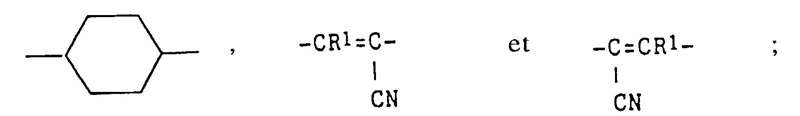 Z⁴ ayant aussi la signification -CR¹=N- ou -N=CR¹- ou représentant une simple liaison directe ; Z' représente indépendamment -O-CO-, -CO-O-, -NR¹-CO- et -CO-NR¹- ; chaque n' représente indépendamment 0 ou 1; R¹ représente indépendamment un atome d'hydrogène ou un groupe alkyle comportant de 1 à 4 atomes de carbone ; Z⁶ représente un groupe hydrocarbyle divalent comportant de 1 à 12, de préférence de 1 à 6, mieux encore de 1 à 4 atomes de carbone ; -SO-, -SO₂-, -S-, -S-S-, -O- ou -CO- ; Z³ représente NH₂-, NH₂-SO₂-, NH₂-CO- ou NH₂-Z⁵-O- ; Z⁵ représente un groupe alkyle ou cycloalkyle comportant de 1 à 10, de préférence de 1 à 6, mieux encore de 1 à 3 atomes de carbone ; et n a une valeur moyenne de 0 à 6 ; à condition que (a) au moins 80 % des groupes Z et X' se trouvent en position para l'un par rapport à l'autre dans la formule I, et (b) au moins 80 % des groupes Z³ et Z⁴ se trouvent en position para l'un par rapport à l'autre dans la formule III ; et dans lequel les composants (A) et (B) sont utilisés en des quantités qui fournissent un rapport d'atomes d'hydrogène actifs par groupe époxydique vicinal allant de 0,01:1 à 1,05:1.

2. Composé de type résine époxyde prépolymérisée selon la revendication 1, dans lequel le composant (B) est le 4'-sulfonamido-N-phénylbenzamide ou le N,N'-bis(4-hydroxyphényl)téréphtalamide.

3. Composé de type résine époxyde prépolymérisée selon la revendication 1 ou 2, dans lequel le composant (A) est une résine époxyde répondant aux formules générales VI, VII, VIII, IX et X : 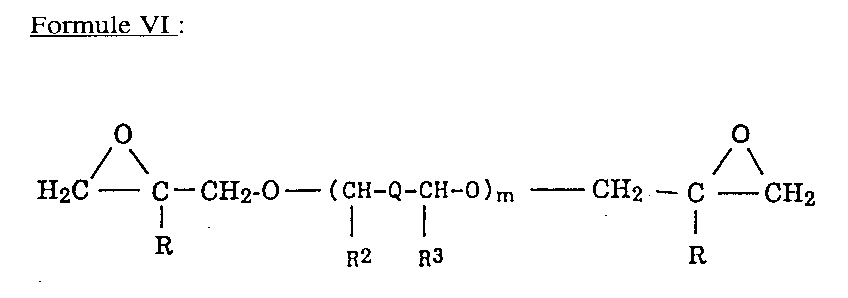 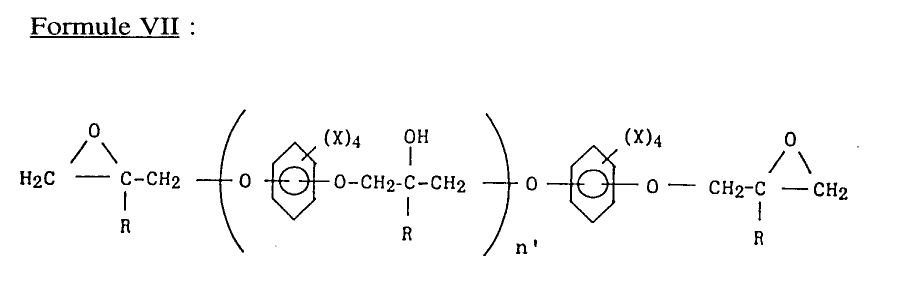 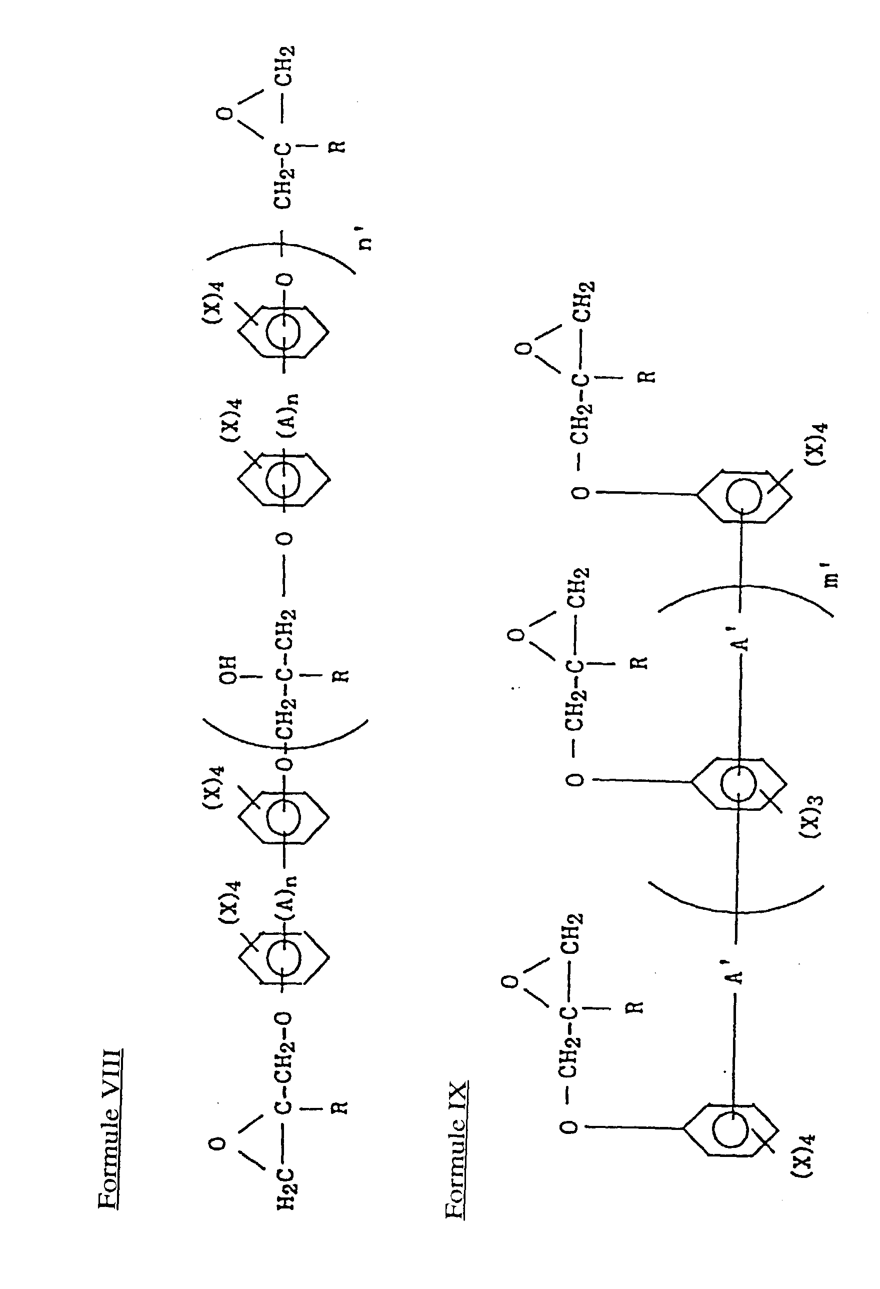 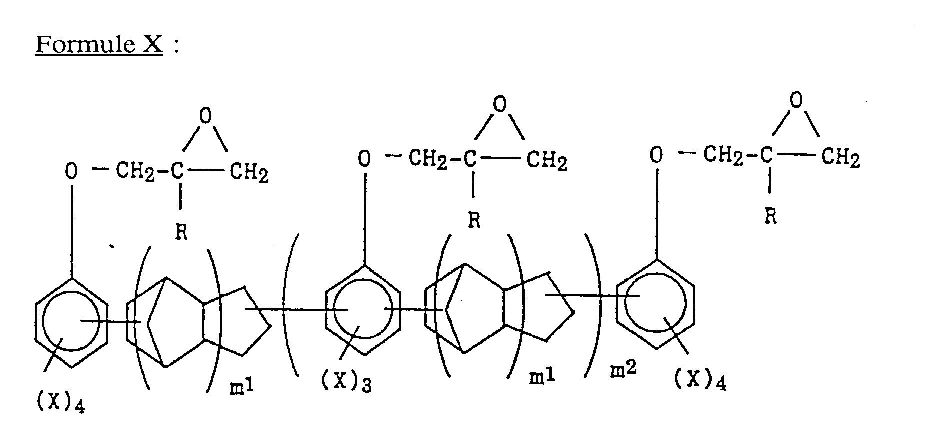 dans lesquelles chaque A représente indépendamment un groupe hydrocarbyle divalent comportant de 1 à 12 atomes de carbone, -O-, -S-, -S-S-,-SO-, -SO₂- ou -CO- ; chaque A' représente indépendamment un groupe hydrocarboné divalent comportant de 1 à 6, de préférence de 1 à 3 atomes de carbone ; Q représente une simple liaison, -CH₂-S-CH₂- , -(CH₂)_{n¹}-, ou 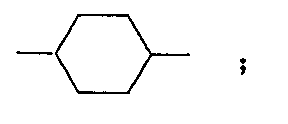 chaque R représente indépendamment un atome d'hydrogène ou un groupe alkyle comportant de 1 à 4 atomes de carbone ; R² et R³ représentent chacun indépendamment un atome d'hydrogène, un groupe hydrocarbyle ou halogénohydrocarbyle comportant de 1 à 6 atomes de carbone ; chaque X représente indépendamment un atome d'hydrogène, un groupe hydrocarbyle ou hydrocarbyloxy comportant de 1 à 12 atomes de carbone, un atome d'halogène, -NO₂- ou -C≡N ; m a une valeur allant de 1 à 10 ; m' a une valeur allant de 0,01 à 12 ; m¹ aune valeur moyenne allant de 1 à 12 ; m² a une valeur allant de 1 à 12 ; n a une valeur de 0 ou 1; n' a une valeur moyenne allant de 0 à 3 et n¹ a une valeur moyenne allant de 1 à 10.

4. Composé selon la revendication 1, ledit composé de type résine époxyde prépolymérisée étant orienté au cours du traitement.

5. Composition durcissable comprenant (I) une résine époxyde prépolymérisée selon la revendication 1, et (II) une quantité durcissante d'un agent ou catalyseur de durcissement approprié pour le composant (I).

6. Composition durcissable selon la revendication 5, dans laquelle ladite résine époxyde est orientée avant ou pendant le durcissement.

7. Composition durcissable selon la revendication 6, dans laquelle on réalise ladite orientation en soumettant la composition à un champ électrique, à un champ magnétique ou à un écoulement en cisaillement.

8. Produit ou article résultant du durcissement d'une composition comprenant :
(I) une résine époxyde prépolymérisée préparée en faisant réagir
(A) au moins une résine époxyde présentant en moyenne plus d'un groupe époxydique vicinal par molécule ; avec
(B) au moins un composé présentant en moyenne plus d'un atome d'hydrogène actif par molécule, répondant aux formules suivantes I ou III : 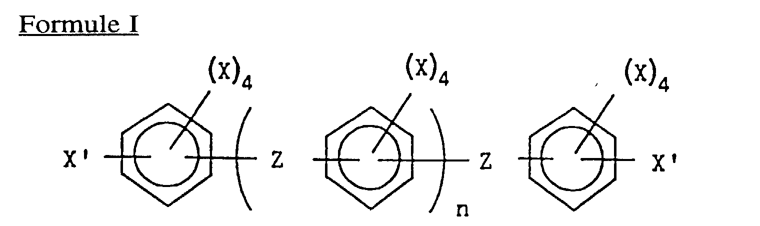 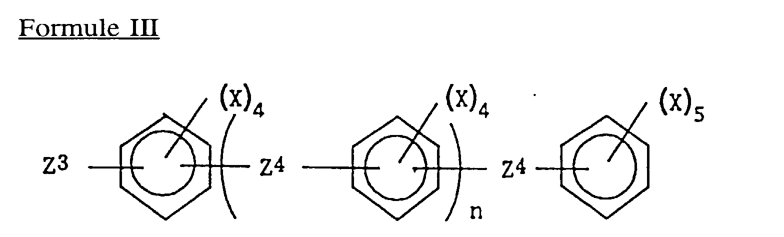 dans lesquelles chaque X représente indépendamment un atome d'hydrogène, un groupe hydrocarbyle ou hydrocarbyloxy comportant de 1 à 12, de préférence de 1 à 6, mieux encore de 1 à 4 atomes de carbone, un atome d'halogène, -NO₂ ou -C≡N ; chaque X' représente indépendamment un groupe hydroxyle, un groupe acide carboxylique ou le groupe répondant à la formule IV : 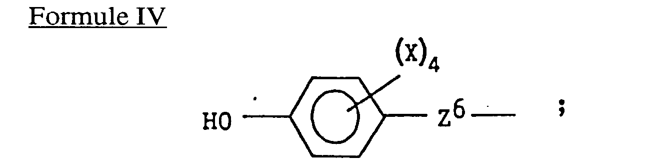 chaque Z ou Z⁴ représente indépendamment -CR¹=CR¹-, -CR¹=CR¹-CR¹=CR¹-, -CR¹=N-N=CR¹-, -CR¹=CR¹-CO-O-CH₂-, -CR¹=CR¹-CO-O-CH₂-CH₂-, -CH₂-O-CO-CR¹=CR¹-, -CH₂-CH₂-O-CO-CR¹=CR¹-, -CR¹=CR¹-CO-O-, -O-CO-CR¹=CR¹-, -N=N-, -CO-NH-, -NH-CO-, -CO-NH-NH-CO-, -C≡C-, -C≡C-C≡C-, -CO-S-, -S-CO-, -CO-O-, -O-CO-, une simple liaison directe quand n≥1, 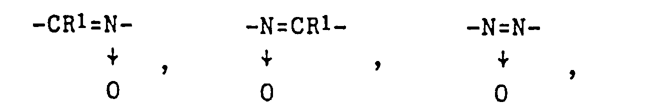 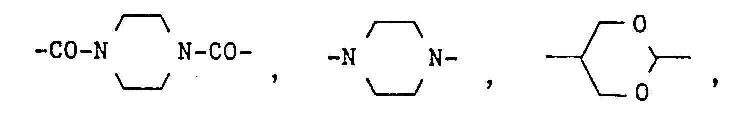 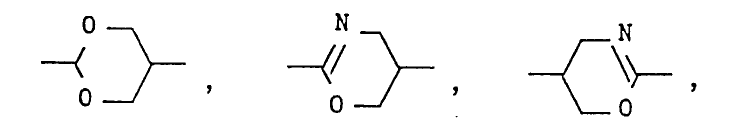 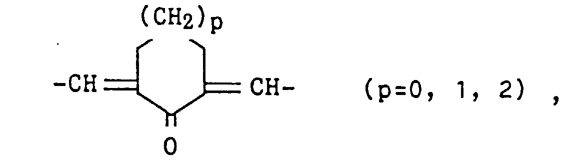 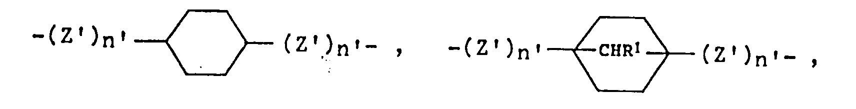 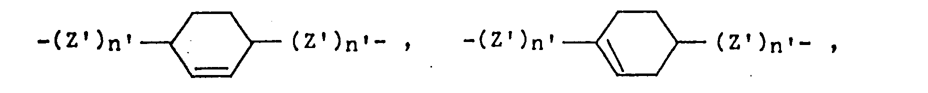 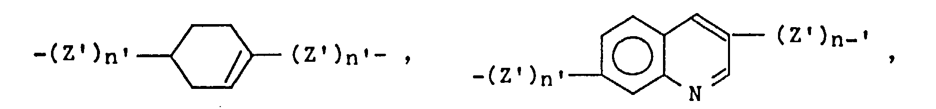 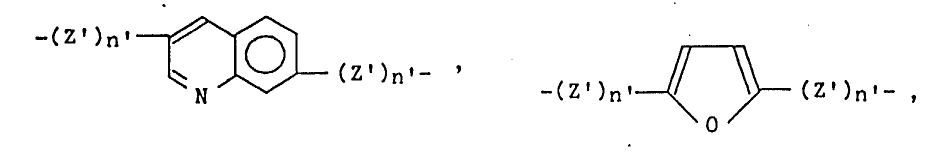 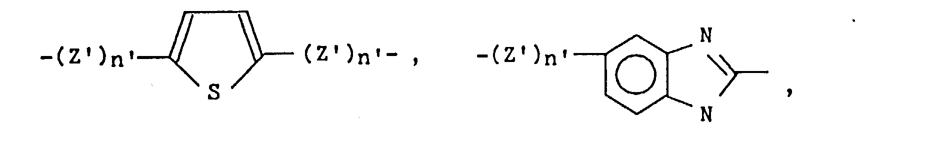 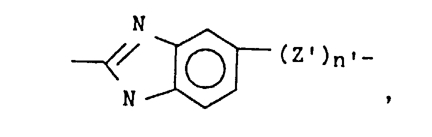 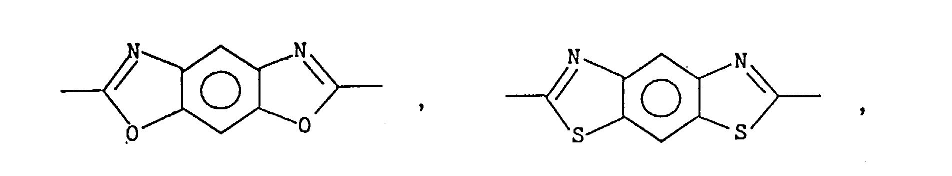 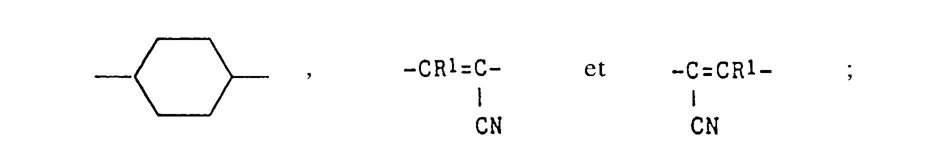 Z⁴ ayant aussi la signification -CR¹=N- ou -N=CR¹- ou représentant une simple liaison directe ; Z' représente indépendamment -O-CO-, -CO-O-, -NR¹-CO- et -CO-NR¹- ; chaque n' représente indépendamment 0 ou 1; R¹ représente indépendamment un atome d'hydrogène ou un groupe alkyle comportant de 1 à 4 atomes de carbone ; Z⁶ représente un groupe hydrocarbyle divalent comportant de 1 à 12, de préférence de 1 à 6, mieux encore de 1 à 4 atomes de carbone ; -SO-, -SO₂-, -S-, -S-S-, -O- ou -CO- ; Z³ représente NH₂-, NH₂-SO₂-, NH₂-CO- ou NH₂-Z⁵-O- ; Z⁵ représente un groupe alkyle ou cycloalkyle comportant de 1 à 10, de préférence de 1 à 6, mieux encore de 1 à 3 atomes de carbone ; et n a une valeur moyenne allant de 0 à 6 ; à condition que
(a) au moins 80 % des groupes Z et X' se trouvent en position para l'un par rapport à l'autre dans la formule I, et
(b) au moins 80 % des groupes Z³ et Z⁴ se trouvent en position para l'un par rapport à l'autre dans la formule III; et
dans lequel les composants (A) et (B) sont utilisés en des quantités qui fournissent un rapport d'atomes d'hydrogène actifs par groupe époxydique vicinal allant de 0,01:1 à 0,95:1; et
(II) une quantité durcissante d'un agent de durcissement ou catalyseur de durcissement approprié pour le composant (I).

9. Produit ou article résultant du durcissement d'une composition selon la revendication 8, dans lequel :
(i) le composant (A) est une résine époxyde répondant aux formules suivantes VI, VII, VIII, IX et X : 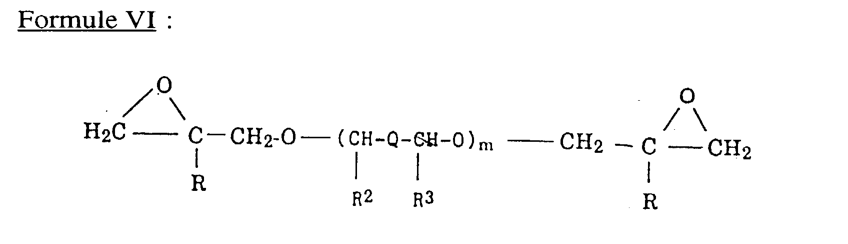 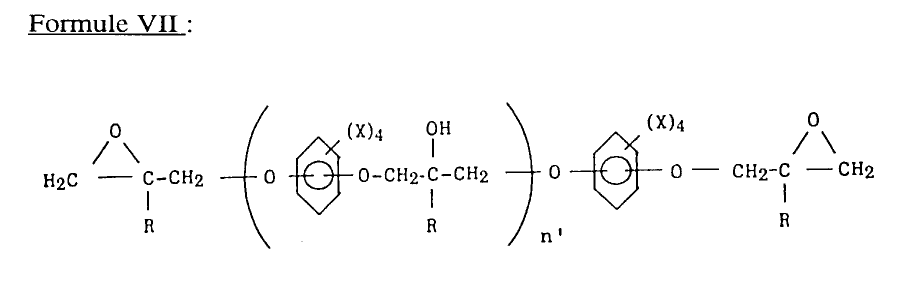 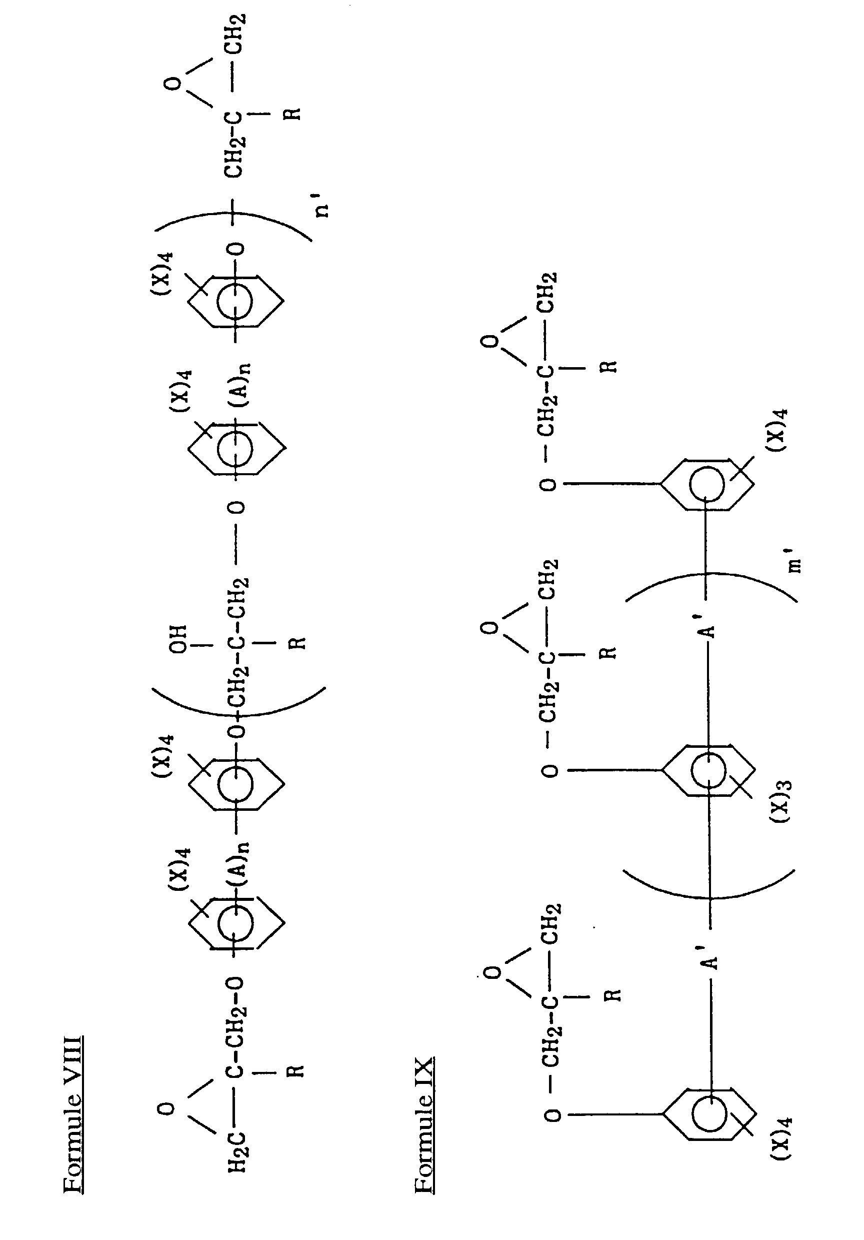 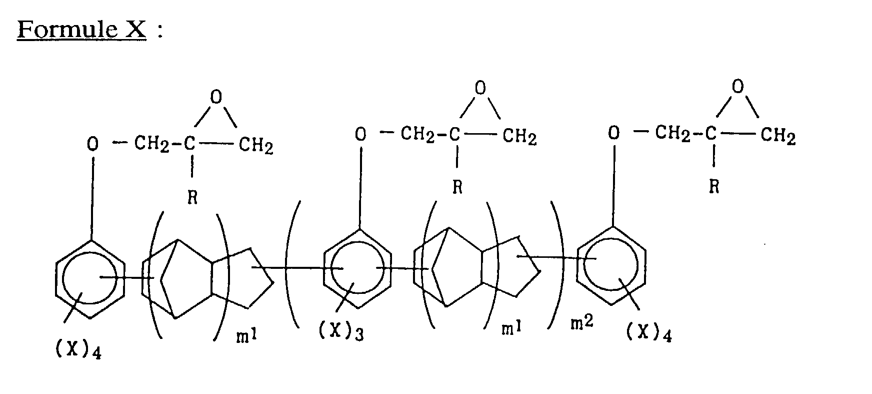 dans lesquelles chaque A représente indépendamment un groupe hydrocarbyle divalent comportant de 1 à 12 atomes de carbone, -O-, -S-, -S-S-, -SO-, -SO₂- ou -CO- ; chaque A' représente indépendamment un groupe hydrocarboné divalent comportant de 1 à 6, de préférence de 1 à 3 atomes de carbone ; Q représente une simple liaison, -CH₂-S-CH₂- , -(CH₂)_{n¹}-, ou 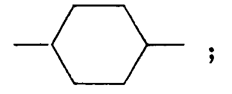 chaque R représente indépendamment un atome d'hydrogène ou un groupe alkyle comportant de 1 à 4 atomes de carbone ; chaque R² et R³ représentent indépendamment un atome d'hydrogène, un groupe hydrocarbyle ou halogénohydrocarbyle comportant de 1 à 6 atomes de carbone ; chaque X représente indépendamment un atome d'hydrogène, un groupe hydrocarbyle ou hydrocarbyloxy comportant de 1 à 12 atomes de carbone, un atome d'halogène, -NO₂- ou -C≡N ; m a une valeur allant de 1 à 10 ; m' a une valeur allant de 0,01 à 12 ; m¹ a une valeur moyenne allant de 1 à 12 ; m² a une valeur allant de 1 à 12 ; n a une valeur de 0 ou 1 ; n' a une valeur moyenne allant de 0 à 3 et n¹ a une valeur moyenne allant de 1 à 10 ;
(ii) le composant (B) est un composé répondant à la formule I dans laquelle chaque X représente indépendamment un atome d'hydrogène, un groupe hydrocarbyle ou hydrocarbyloxy comportant de 1 à 4 atomes de carbone, un atome d'halogène ou un groupe -C≡N ; chaque X' représente indépendamment un groupe hydroxyle, un groupe acide carboxylique ou un groupe répondant à la formule IV ; chaque Z représente indépendamment -N=N-, -CO-NH-, -NH-CO-, -CO-O-, -O-CO-, -CR¹=CR¹-, 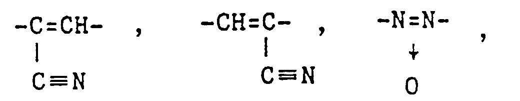 dans lesquels chaque R¹ représente indépendamment un atome d'hydrogène ou un groupe alkyle comportant de 1 à 4 atomes de carbone ; chaque Z⁶ représente indépendamment un groupe hydrocarbyle divalent comportant de 1 à 4 atomes de carbone, -SO-, -SO₂-, -O- ou -CO- ; et n représente une valeur allant de 0 à 6 ;
(iii) les composants (A) et (B) sont employés en des quantités qui fournissent un rapport des atomes d'hydrogène actifs par groupe époxydique vicinal allant de 0,01:1 à 0,95:1 ; et
(iv) le composant (II) est un composé aliphatique ou cycloaliphatique comportant plus d'un groupe amine primaire ou secondaire par molécule, un composé aromatique comportant plus d'un groupe amine primaire ou secondaire par molécule, un anhydride d'acide dicarboxylique, une résine novolaque phénol-formaldéhyde, une résine novolaque phénolformaldéhyde substituée, une résine urée-aldéhyde alkylolée, une résine mélamine-aldéhyde alkylolée, une guanidine, ou une quelconque combinaison de ces derniers.

10. Produit ou article résultant du durcissement d'une composition de la revendication 8, dans lequel le composant (B) est le téréphtalate de bis(4-hydroxyphényle).

11. Produit ou article résultant du durcissement d'une composition de la revendication 9, dans lequel le composant (B) est le N,N'-diphényltéréphtalamide ou un mélange de N,N'-ditéréphtalamide et de N-phénylbenzamide.

12. Produit ou article résultant du durcissement d'une composition de la revendication 9, dans lequel le composant B est le 4'-sulfonamido-N-phénylbenzamide.

13. Produit ou article selon la revendication 8, 9, 10, 11 ou 12, dans lequel ladite résine époxyde est orientée avant ou au cours du durcissement.

14. Produit ou article selon la revendication 13, dans lequel ladite orientation est réalisée en soumettant la composition à un champ électrique, à un champ magnétique ou à un écoulement en cisaillement.
